# EUROPEAN PATENT SPECIFICATION

(11) **EP 0 778 852 B1**
(45) Date of publication and mention of the grant of the patent: **20.10.1999**
(21) Application number: 95928751.7
(22) Date of filing: 04.08.1995
(51) Int. Cl.: C08F 212/00, C08F 210/00, C08L 23/02, C08L 25/02, C08F 4/602, C08F 4/74

(54) **THERMOSET ELASTOMERS**
WÄRMEHÄRTBARE ELASTOMERE
ELASTOMERES THERMODURCIS

(30) Priority: 02.09.1994 US 300300
(43) Date of publication of application: 18.06.1997
(73) Proprietor: THE DOW CHEMICAL COMPANY, Midland, Michigan 48674 (US)
(72) Inventor: MCKAY, Kevin, W., White Bear Lake, MN 55110 (US); TIMMERS, Francis, J., Midland, MI 48642 (US); FEIG, Edward, R., Baton Rouge, LA 70806 (US)
(74) Representative: Smulders, Theodorus A.H.J., Ir.
(86) International application number: US9509945
(87) International publication number: WO9607681

(56) References cited:
- EP-A- 0 416 815
- EP-A- 0 572 990
- EP-A- 0 634 427
- WO-A-94/06858
- US-A- 4 130 535
- US-A- 5 380 810
- Dialog Information Services, file 351, DERWENT WPI, Dialog accession no. 009584777, WPI accession no. 93-278323/35, IDEMITSU KOSAN CO LTD: "Olefinic copolymer for elastomers, high tenacity material andcomplex materials - prepd. by copolymerising styre- nic monomer and olefin in catalyst contg. transitionmetal and organo metallic cpds., for modified copo- lymers mfr."; & JP,A,5194666, 930803, 9335 (Basic) abstract

## Description

The subject invention pertains to thermoset eleastomers, to a process for their preparation, and to products fabricated from such elastomers.

Elastomers are defined as materials which experience large reversible deformations under relatively low stress. Elastomers are typically characterized as having structural irregularities, non-polar structures, or flexible units in the polymer chain. Some examples of commercially available elastomers include natural rubber, ethylene/propylene (EPM) copolymers, ethylene/propylene/diene (EPDM) copolymers, styrene/butadiene copolymers, chlorinated polyethylene, and silicone rubber.

Thermoplastic elastomers are elastomers having thermoplastic properties. That is, thermoplastic elastomers may be molded or otherwise shaped and reprocessed at temperatures above their melting or softening point. One example of thermoplastic elastomers is styrene-butadiene-styene (SBS) block copolymers. SBS block copolymers exhibit a two phase morphology consisting of glassy polystyrene domains connected by rubbery butadiene segments. At temperatures between the glass transition temperatures of the butadiene midblock and the styrene endblocks, that is, at temperatures from -90°C to 116°C, the SBS copolymers act like a crosslinked elastomer.

EP-A-0 416 815 discloses pseudorandom ethylene-styrene interpolymers. Uncrosslinked pseudorandom ethylene/styrene interpolymers exhibit a decreased modulus at temperatures above the melting or softening points of the interpolymer.

SBS copolymers and uncrosslinked ethylene-styrene pseudorandom interpolymers suffer the disadvantages of relatively low mechanical strength, susceptibility to ozone degradation (to the extent that they have sites of unsaturation in the polymer backbone) and utility in only applications where the temperature of the elastomer will not exceed the melting or softening point of the elastomer.

In contrast, thermoset elastomers are elastomers having thermoset properties. That is, thermoset elastomers irreversibly solidify or "set" when heated, generally due to an irreversible crosslinking reaction. Two examples of thermoset elastomers are crosslinked ethylene-propylene monomer rubber (EPM) and crosslinked ethylene-propylene-diene monomer rubber (EPDM). EPM materials are made by the copolymerization of ethylene and propylene. EPM materials are typically cured with peroxides to give rise to crosslinking, and thereby induce thermoset properties. EPDM materials are linear interpolymers of ethylene, propylene, and a nonconjugated diene such as 1,4-hexadiene, dicyclopentadiene, or ethylidene norbornene. EPDM materials are typically vulcanized with sulfur to induce thermoset properties, although they alternatively may be cured with peroxides. While EPM and EPDM materials are advantageous in that they have applicability in higher temperature applications, EPM and EPDM elastomers suffer the disadvantages of low green strength (at lower ethylene contents), of a higher susceptibility of the cured elastomer to attack by oils than characteristic of styrene butadiene rubbers, and of resistance of the cured elastomer to surface modification.

Elastomers suitable for use over a broad range of temperature and which are also less susceptible to ozone degradation are desired. Thermoset elastomers which are prepared from elastomers having high green strength (which provides greater flexibility in their handling prior to curing) are particularly desired. Also desired, are thermoset elastomers which are resistant to oil, which are useful in fabricated parts which typically contact oil, such as automotive parts and gaskets. Also desired are thermoset elastomers which easily undergo surface modification, to promote surface adhesion of the elastomer and/or to provide ionic sites on the elastomer surface. Also desired is a process for preparing such thermoset elastomers.

Thermoplastic vulcanizates are crystalline polyolefinic matrices through which thermoset elastomers are generally uniformly distributed. Examples of thermoplastic vulcanizates include EPM and EPDM thermoset materials distributed in a crystalline polypropylene matrix. Such thermoplastic vulcanizates are disadvantageous, in that they are susceptible to oil degradation. Thermoplastic vulcanizates which are more resistant to oil are desired. Also desired is a process for preparing such thermoplastic vulcanizates.

In EP-A-0 634 427 a document citable under Art 54(3) EPC describes higher α-olefin copolymer which are prepared in the presence of a catalyst formed from a solid titanium catalyst component containing Mg, Ti, halogen and an electron donor; an organoaluminum compound catalyst component and an electron donor catalyst component.

WO-A-94/06858 describes a composition comprising an ethylene/α-olefin copolymer, a curing agent and a filler. Further, it is indicated that other monomers can be usefully copolymerized with ethylene.

In US-A-4,130,535 vulcanized mono-olefin copolymer rubbers comprising essentially non-crystalline, rubbery copolymers of two or more α-mono-olefins, preferably copolymerized with at least one polyene are required in a thermoplastic elastomeric blend with crystalline thermoplastic polyolefins.

JP-5/194666 describes olefinic copolymers for elastomers prepared by copolymerizing styrenic monomers and olefins with a catalyst containing a transition metal and organometallic compounds.

### Summary of Invention

The subject invention provides a thermoset elastomer comprising a crosslinked interpolymer of:
(a) from 15 to 70 weight percent of at least one α-olefin
(b) from 30 to 70 weight percent of at least one vinylidene aromatic compound, and
(c) from 0 to 15 weight percent of at least one diene, wherein the distribution of the monomers (a), (b) and (c) is described by the Bernoullian statistical model or by a first or second order Markovian statistical model.

The subject invention further provides a process for preparing a thermoset elastomer comprising:
(a) reacting at least one α-olefin with at least one vinylidene aromatic compound and optionally at least one diene, in the presence of a constrained geometry catalyst, to form an interpolymer, wherein the distribution of the monomers is described by the Bernoullian statistical model or by a first or second order Markovian statistical model; and
(b) curing the said interpolymer to form a thermoset elastomer.

The subject invention further provides a thermoplastic vulcanizate comprising :
(1) the crosslinked interpolymer as described heretofore; and
(2) at least one thermoplastic polyolefin.

The subject invention further provides a process for making a thermoplastic vulcanizate comprising:
(a) reacting at least one α-olefin with at least one vinylidene aromatic compound and optionally at least one diene in the presence of a constrained geometry catalyst to form an interpolymer, wherein the distribution of the monomers is described by the Bernoulian statistical model or by a first or second order Markovian statistical model;
(b) intimately mixing the interpolymer with at least one thermoplastic polyolefin at a temperature above the melting or softening point of the thermoplastic polyolefin;
(c) providing to the intimate mixture an agent for curing the interpolymer;
(d) simultaneously curing the interpolymer and compounding the intimate mixture to form a thermoplastic vulcanizate.

The subject invention further comprises fabricated parts comprising the thermoset elastomers or thermoplastic vulcanizates of the invention.

These and other embodiments are more fully described in the following Detailed Description.

The term "polymer" as used herein refers to a polymeric compound prepared by polymerizing monomers whether of the same or a different type. The generic term polymer thus embraces the term homopolymer, usually employed to refer to polymers prepared from only one type of monomer, and the term interpolymer as defined hereinafter.

The term "interpolymer" as used herein refers to polymers prepared by the polymerization of at least two different types of monomers. The generic term interpolymer thus includes copolymers, usually employed to refer to polymers prepared from two different monomers, and polymers prepared from more than two different types of monomers.

Statements herein that a polymer or interpolymer comprises or contains certain monomers, mean that such polymer or interpolymer comprises or contains polymerized therein units derived from such a monomer. For example, if a polymer is said to contain ethylene monomer, the polymer will have incorporated in it an ethylene derivative, that is, -CH₂-CH₂-.

The elastomeric thermoset compositions of the invention are substantially linear or linear interpolymers comprising an olefin and a vinylidene aromatic monomer, which interpolymers have been crosslinked to yield thermoset behavior; and wherein the distribution of the monomers of the interpolymer is described by the Bernoullian statistical model or by a first or second order Markovian statistical model, as described by J. C. Randall in Polymer Sequence Determination, Carbon-13 NMR Method, Academic Press New York, 1977, pp. 71-78. Said interpolymers do not contain more than 15 weight percent of the total amount of vinylidene aromatic monomer in blocks of more than three vinylidene aromatic monomer units.

A preferred subset of the interpolymers of the invention is characterized by an architecture in which all phenyl (or substituted phenyl) groups which are pendant from the polymer backbone are separated by two or more carbon backbone units. In other words, the preferred subset relates to interpolymers of the invention, which in their noncrosslinked state, can be described by the following general formula (using styrene as the vinylidene aromatic monomer and ethylene as the α-olefin for illustration): 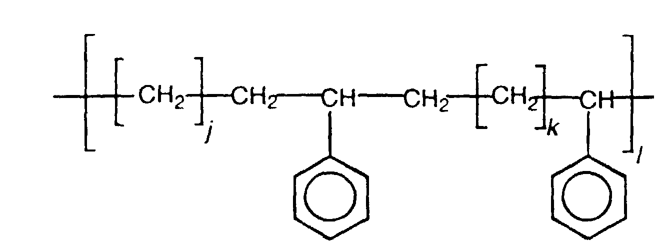 Noncrosslinked pseudorandom interpolymers are described in EP-A-0 416 815.

While not wishing to be bound by any particular theory, it is believed that during the addition polymerization reaction of, for example, ethylene and styrene, in the presence of a constrained geometry catalyst as described below, if a styrene monomer is inserted into the growing polymer chain, the next monomer inserted will be an ethylene monomer or a styrene monomer inserted in an inverted or "tail-to-tail" fashion. It is believed that after an inverted or "tail-to-tail" styrene monomer is inserted, the next monomer will be ethylene, as the insertion of a second styrene monomer at this point would place it too close to the inverted styrene monomer, that is, less than two carbon backbone units away.

Preferably, the said interpolymer will be characterized as largely atactic, as indicated by a 13C-NMR spectrum in which the peak areas corresponding to the main chain methylene and methine carbons representing either meso diad sequences or racemic diad sequences does not exceed 75 percent of the total peak area of the main chain methylene and methine carbons.

The interpolymers may further be characterized as either linear or substantially linear. As used herein, the term "substantially linear" means that the interpolymer is characterized as having long chain branches. In contrast, the term "linear" means that the interpolymer lacks long chain branches.

Substantially linear interpolymers are characterized as having a melt flow ratio, I₁₀/I₂ (as determined by ASTM D-1238) ≥ 5.63, a molecular weight distribution (as determined by gel permeation chromatography) M_{W}/M_{N} ≤ (I₁₀/I₂)-4.63, and either a critical shear rate at the onset of surface melt fracture of at least 50 percent greater than the critical shear rate at the onset of surface melt fracture of a linear olefin polymer having the same I₂ and M_{w}/M_{N} or a critical shear rate at the onset of gross melt fracture of greater than (4 x 10⁶ dynes/cm²) 0.4 MPa.

To identify the melt fracture phenomena, an apparent shear stress vs. apparent shear rate plot may be employed. According to Ramamurthy in Journal of Rheology, 30(2),337-357, 1986, above a certain critical flow rate, the observed extrudate irregularities may be broadly classified into two main types: surface melt fracture and gross melt fracture.

Surface melt fracture occurs under apparently steady flow conditions and ranges in detail from loss of specular gloss to the more severe form of "sharkskin". As used herein, the onset of surface melt fracture is characterized at the beginning of losing extrudate gloss at which the surface roughness of extrudate can only be detected by 40 X magnification. Gross melt fracture occurs at unsteady flow conditions and ranges in detail from regular (alternating rough and smooth, helical, etc.) to random distortions. The critical shear rate at the onset of surface melt fracture and onset of gross melt fracture, as used herein, are based on the changes of surface roughness and configurations of the extrudates extruded by a GER.

Substantially linear interpolymers of ethylene and styrene are disclosed in US-A-5,272,236. The crosslinked interpolymer preferably comprises : (a) 25 to 60 weight percent of at least one α-olefin, (b) 35 to 60 weight percent of at least one vinylidene aromatic compound, and (c) 3 to 15 weight percent of at least one diene.

Preferably the phenyl or substituted phenyl groups of the vinylidene aromatic compound are separated by two or more carbon backbone units.

Particularly the crosslinked interpolymer is comprised of:
(a) from 40 to 65 weight percent of at least one α-olefin selected from the group consisting of ethylene, propylene, 1-butene, 3-methyl-1-butene, 1-pentene, 4-methyl-1-pentene, 1-hexene, 5-methyl-1-hexene, 4-ethyl-1-hexene, 1-octene, 1-dodecene, 3-phenylpropene, and mixtures thereof; and
(b) from 35 to 60 weight percent of at least one vinylidene aromatic compound selected from the group consisting of styrene, α-methylstyrene, ortho-methylstyrene, meta-methylstyrene, para-methylstyrene, chlorostyrene, vinylbenzocyclobutane and divinylbenzene, and their mixtures.

### The α-olefin Monomer

Suitable α-olefins are represented by the following formula:

CH₂=CHR

where R is hydrogen or a hydrocarbyl radical having from one to twenty carbon atoms. Typical α-olefins include, for example, ethylene, propylene, 1-butene, 3-methyl-1-butene, 1-pentene, 4-methyl-1-pentene, 1-hexene, 5-methyl-1-hexene, 4-ethyl-1-hexene, 1-octene, 1-dodecene, 3-phenylpropene, and mixtures thereof. Preferably, the α-olefin will comprise ethylene, or a mixture of ethylene with another α-olefin, such as 1-butene, 1-pentene, 4-methyl-1-pentene, 1-hexene, or 1-octene.

### The Vinylidene Aromatic Monomer

Suitable vinylidene aromatic monomers are represented by the following formula: 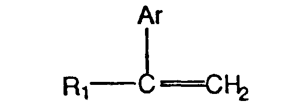 wherein R₁ is selected from the group of radicals consisting of hydrogen and alkyl radicals containing three carbons or less, and Ar is selected from the group of radicals consisting of phenyl, halophenyl, alkylphenyl, and alkylhalophenyl. Exemplary vinylinene aromatic monomers include styrene; α-methylstyrene; the C1-C4 alkyl- or phenyl- ring substituted derivatives of styrene, such as ortho-, meta-, and para-methylstyrene, or mixtures thereof; the ring halogenated styrenes such as chlorostyrene; vinylbenzocyclobutanes; and divinylbenzene and mixtures thereof. Styrene is a particularly desirable vinylidene aromatic monomer used in the practice of the present invention.

The level of vinylidene aromatic monomer incorporated in the thermoset elastomers of the invention is at least 30, preferably at least 35 weight percent based on the weight of the interpolymer. The vinylidene aromatic monomer is typically incorporated in the interpolymers of the invention in an amount less than 70, more typically less than 60 weight percent based on the weight of the interpolymer.

### The Diene:

One or more dienes can optionally be incorporated into the interpolymer to provide functional sites of unsaturation on the interpolymer useful, for example, to participate in crosslinking reactions. While conjugated dienes such as butadiene, 1,3-pentadiene (that is, piperylene), or isoprene may be used for this purpose, nonconjugated dienes are preferred. Typical nonconjugated dienes include, for example the open-chain nonconjugated diolefins such as 1,4-hexadiene (see U.S. Patent No.2,933,480) and 7-methyl-1,6-octadiene (also known as MOCD); cyclic dienes; bridged ring cyclic dienes, such as dicyclopentadiene (see U.S. Patent No. 3,211,709); or alkylidenenorbornenes, such as methylenenorbornene or ethylidenenorbornene (see U.S. Patent No. 3,151,173). The nonconjugated dienes are not limited to those having only two double bonds, but rather also include those having three or more double bonds.

The diene is incorporated in the elastomers of the invention in an amount of from 0 to 15 weight percent based on the total weight of the interpolymer. When a diene is employed, it will preferably be provided in an amount of at least 2 weight percent, more preferably at least 3 weight percent, and most preferably at least 5 weight percent, based on the total weight of the interpolymer. Likewise, when a diene is employed, it will be provided in an amount of no more than 15, preferably no more than 12 weight percent based on the total weight of the interpolymer. The diene, when present, is preferably selected from the group consisting of butadiene, 1,3-pentadiene, 1,4-pentadiene, isoprene, 1,4-hexadiene, 7-methyl-1,6-octadiene, dicyclopentadiene, methylenenorbornene, ethylidenenorbornene, and methyltetrahydroindene, and mixtures thereof. Preparation of the said interpolymers according to the present invention : These interpolymers may be prepared via the solution, slurry, or gas phase interpolymerization of the α-olefin, the vinylidene aromatic compound, and the optional diene, in the presence of an olefin polymerization catalyst comprising a metal coordination complex and activating cocatalyst, such as are described in EP-A-0 416 815, EP-A-0 468 651, EP-A-0 514 828, and EP-A-0 520 732, and in US. Patent Nos. 5,055,438, 5,057,475, 5,096,867, 5,064,802, 5,132,380 and 5,374,696. Also suitable in the practice of the claimed invention are the monocyclopentadienyl transition metal olefin polymerization catalysts taught in USP 5,026,798, as well as the catalysts disclosed in EP-A-0 572 990.

The foregoing catalysts may be further described as comprising a metal coordination complex comprising a metal of Group III or IV or the Lanthanide series of the Periodic Table of the Elements and a delocalized Π-bonded moiety substituted with a constrain-inducing moiety, said complex having a constrained geometry the metal atom such that the angle at the metal between the centroid of the delocalized, substituted Π-bonded moiety and the center of at least one remaining substituent is less than such angle in a similar complex containing a similar II-bonded moiety lacking in such constrain-inducing substituent, and provided further that for such complexes comprising more than one delocalized, substituted Π-bonded moiety, only one thereof for each metal atom of the complex is a 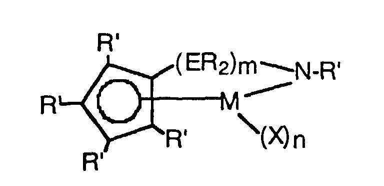 wherein:
M is titanium bound in an η5 bonding mode to the cyclopentadienyl group;
R' at each occurrence is independently selected from the group consisting of hydrogen, silyl, hydrocarbyl, and combinations thereof, each said R' having up to 10 carbon or silicon atoms, or with two R' groups (when R' is not hydrogen) being joined together to form a divalent derivative thereof connected to adjacent positions of the cyclopentadienyl ring to form a fused ring structure;
E is silicon or carbon;
X is independently at each occurrence hydride, halo, hydrocarbyl, or hydrocarbyloxy, each said X having up to 10 carbons, or when M is in the +3 formal oxidation state, X is preferably a stabilizing ligand such as a hydrocarbyl, silyl, amido or phosphido ligand substituted with one or more aliphatic or aromatic ether-, thioether-, amine- or phosphine- functional groups, especially such amine or phosphine groups that are tertiary substituted, said stabilizing ligand having from 3 to 30 nonhydrogen atoms, or X is a C₃₋₁₅ hydrocarbyl group containing ethylenic unsaturation;
m is 1 or 2; and
n is 1 or 2.

Examples of these most preferred metal coordination complexes include compounds wherein the R' on the amido group is methyl, ethyl, propyl, butyl, pentyl, or hexyl (including isomers of these alkyls) norbornyl, benzyl, and phenyl; the cyclopentadienyl group is cyclopentadienyl, indenyl, tetrahydroindenyl, fluorenyl, octahydrofluorenyl, and tetrahydrofluorenyl; R' on the foregoing cyclopentadienyl groups is independently at each occurrence hydrogen, methyl, ethyl, propyl, butyl, pentyl, hexyl, norbornyl, benzyl, and phenyl; and X is chloro, bromo, iodo, methyl, ethyl, propyl, butyl, pentyl, hexyl (including isomers of these alkyls), norbornyl, benzyl, and phenyl, or when M is in the +3 formal oxidation state, X is most preferably 2-dialkylaminobenzyl or 2-(dialkyl-aminomethyl)phenyl groups containing from 1 to 4 carbons in the alkyl groups, or an allyl, 1-methylallyl, 2-methylallyl, 1,1-dimethylallyl, 1,2,3-trimethylallyl, 1-phenyl-3-benzylallyl or 1,1-dipbenyl-3-(diphenylmethyl)allyl group.

Specific embodiments of these most preferred metal coordination complexes include (tert-butylamido)(tetramethyl-η5-cyclopentadienyl)-1,2-ethanediylzirconium dichloride; (tert-butylamido) (tetramethyl-η5-cyclopentadienyl)-1,2-ethanediyltitanium dichloride; (methylamido)(tetramethyl-η5-cyclopentadienyl)-1,2-ethanediylzirconium dichloride; (methylamido)(tetramethyl-η5-cyclopentadienyl)-1,2-ethanediyltitanium dichloride; (ethylamido)(tetramethyl-η5-cyclopentadienyl)methylenetitanium dichloride; (tert-butylamido)dimethyl(tetramethyl-η5-cyclic, delocalized, substituted II-bonded moiety. The catalyst further preferably comprises an activating cocatalyst.

1. The metal coordination complex. The metal coordination complex employed will preferably correspond to the following formula: 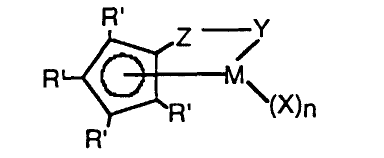 wherein
R' at each occurrence is independently selected from the group consisting of hydrogen, hydrocarbyl, silyl, germyl, cyano, halo and combinations thereof, each said R' having up to 20 non-hydrogen atoms, and with two R' groups (where R' is not hydrogen, halo, or cyano) being optionally joined together to form a divalent derivative thereof connected to adjacent positions of the cyclopentadienyl ring to form a fused ring structure;
X at each occurrence independently is selected from the group consisting of hydride, halo, hydrocarbyl, silyl, germyl, hydrocarbyloxy, amido, siloxy, and combinations thereof, each said X having up to 20 non-hydrogen atoms; or when M is in the +3 oxidation state, X is preferably a stabilizing ligand comprising an amine, phosphine, ether or thioether functionality able to form a coordinate-covalent bond or chelating bond with M, or (when X is a hydrocarbyl) an ethylenic unsaturation able to form an η3 bond with M;
Y is a divalent anionic ligand group comprising nitrogen, phosphorus, oxygen or sulfur (preferably -O-, -S-, -NR*-, or -PR*-) and having up to 20 non-hydrogen atoms, said Y being bonded to Z and M through said nitrogen, phosphorus, oxygen or sulfur, with Y and Z being optionally joined together to form a fused ring system;
M is a Group 4 metal, especially titanium;
Z is SiR*₂, CR*₂, SiR*₂SiR*₂, CR*₂CR*₂, CR*=CR*, CR*₂SiR*₂, GeR*2, BR*, or BR*2; wherein:
R* at each occurrence is independently selected from the group consisting of hydrogen, hydrocarbyl, silyl, halogenated hydrocarbyl groups having up to 20 non-hydrogen atoms, and combinations thereof, with two R* groups from Z (when R* is not hydrogen) or an R* group from Z (when R* is not hydrogen) and an R* group from Y (when R* is not hydrogen) being optionally joined to form a fused ring system; and
n is 1 or 2.

The most preferred metal coordination complexes are amidosilane- or amidoalkanediyl-compounds corresponding to the following formula II: cyclopentadienyl) silanetitanium dimethyl; (tert-butylamido)dimethyl (tetramethyl-η5-cyclopentadienyl)silanezirconium dibenzyl; (benzylamido)dimethyl(tetramethyl-η5-cyclopentadienyl)silanetitanium dichloride; and (phenylphosphido)-dimethyl(tetramethyl-η5-cyclopentadienyl)silane zirconium dibenzyl.

Preferably the constrained geometry catalyst is a metal coordination complex comprising a metal of Group III or IV or the Lanthanide series of the Periodic Table of the Elements and a delocalized Π-bonded moiety substituted with a constrain-inducing moiety, said complex having a constrained geometry the metal atom such that the angle at the metal between the centroid of the delocalized, substituted Π-bonded moiety and the center of at least one remaining substituent is less than such angle in a similar complex containing a similar Π-bonded moiety lacking in such constrain-inducing substituent, and provided further that for such complexes comprising more than one delocalized, substituent Π-bonded moiety, only one thereof for each metal atom of the complex is a cyclic, delocalized, substituted Π-bonded moiety. In particular, the constrained geometry catalyst is selected from the group consisting of (tert-butylamido)(tetramethyl-η5-cyclopentadienyl)-1,2-ethanediylzirconium dichloride; (tert-butylamido) (tetramethyl-η5-cyclopentadienyl)-1,2-ethanediyltitanium dichloride; (tert-butylamido) dimethyl(tetramethyl-η5-cyclopentadienyl) silanetitanium dimethyl; (tert-butylamido) dimethyl(tetramethyl-η5-tetrahydroindenyl silanetitanium dimethyl; (tert-butylamido) dimethyl(tetramethyl-η5-tetrahydrofluorenyl) silanetitanium dimethyl; (tert-butylamido) dimethyl(tetramethyl-η5-octahydrofluorenyl) silanetitanium dimethyl; (tert-butylamido) dimethyl(tetramethyl-η5-cyclopentadienyl) silanetitanium dibenzyl; (tert-butylamido) dimethyl (tetramethyl-η5-cyclopentadienyl) silanezirconium dibenzyl; and mixtures thereof.

Other preferred monocyclopentadienyl metal coordination complexes useful to prepare the interpolymers will include titanium or zirconium in the +2 formal oxidation state and will correspond to the following formula III: 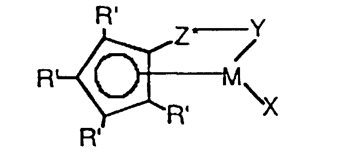 wherein:
R' at each occurrence is independently selected from the group consisting of hydrogen, hydrocarbyl, silyl, germyl, cyano, halo and combinations thereof, each said R' having up to 20 non-hydrogen atoms, with two R' groups (when R' is not hydrogen, halo or cyano) being optionally joined together form a divalent derivative thereof connected to adjacent positions of the cyclopentadienyl ring to form a fused ring structure;
X is a neutral η4-bonded diene group having up to 30 non-hydrogen atoms, which forms a Π-complex or a σ-complex with M (as disclosed in US-A-4,885,315 and US-A-5,470,993),
Y is -O-, -S-, -NR*-, -PR*-;
M is titanium or zirconium in the +2 formal oxidation state;
Z* is SiR*₂, CR*₂, SiR*₂SiR*₂, CR*₂CR*₂, CR*=CR*, CR*₂SiR*₂, or GeR*₂, wherein:
R* at each occurrence is independently hydrogen, or a member selected from the group consisting of hydrocarbyl, silyl, halogenated hydrocarbyl, and mixtures thereof, each said R* having up to 20 non-hydrogen atoms, with two R* groups from Z* (where R* is not hydrogen), or an R* group from Z* (where R* is not hydrogen) and an R* group from Y (where R* is not hydrogen) being optionally joined to form a fused ring system.

2. The activating cocatalyst. The activating cocatalyst is employed to cause the metal coordination complex to become effective as an addition polymerization catalyst or to balance the ionic charge of a catalytically activated metal coordination complex. Suitable cocatalysts for use herein include polymeric or oligmeric alumoxanes, especially methylalumoxane and modified methyl alumoxane; polymeric, oligomeric or monomeric carbylboranes, especially tris(pentafluorophenyl)borane; aluminum alkyls; aluminum halides; haloaluminum alkyls; other strong Lewis acids; substituted ammonium salts; oxidizing agents, such as silver salts, and ferrocenium ions and mixtures of such cocatalysts. Preferred cocatalysts are noninterfering, noncoordinating, ion-forming boron compounds, such as tris(pentafluorophenyl)borane.

Alumoxanes can be made as disclosed in U.S. Patent Nos. 5,542,199; 4,544,762; 5,015,749; and 5,041,585. So called modified methyl alumoxane (MMAO) is also suitable for use as a cocatalyst. One technique for preparing such modified alumoxane is disclosed in U.S. Patent No. 5,041,584.

3. Preparation of the active metal coordination complexes. Active catalyst species, that is, the catalysts resulting from the combination of the metal coordination complexes and an activating cocatalyst, can be prepared via any of the following techniques:
A. As disclosed in U.S. patent 5,064,802 the metal coordination complex containing at least one substituent (preferably at least one hydrocarbyl or substituted hydrocarbyl group) is combined with the cation of a second component which is a Bronsted acid and a noncoordinating compatible anion (such as substituted ammonium salts, for example, N,N-dimethylanalimium tetrakis(pentafluorophenyl)borate);
B. As disclosed in WO-A-93/23412, the metal coordination complex is combined with at least one second component which is a salt of a carbenium and a noncoordinating, compatible anion;
C. As disclosed in U.S. Patent No. 5,189,192, a reduced metal derivative of the desired metal coordination complex wherein the metal is in an oxidation state one less than that of the metal in the finished complex is combined with at least one second component which is a salt of a cationic oxidizing agent and a noncoordinating, compatible anion;
D. As disclosed in US-A-5,347,024, a reduced metal derivative of the desired metal coordination complex wherein the metal is in an oxidation state one less than that of the metal in the finished complex is combined with at least one second component which is a neutral oxidizing agent (such as quinone compounds, especially bisquinones) in combination with a Lewis acid mitigating agent (such as trispefluorophenylborane); or
E. As disclosed in EP-A-0 520 732, the metal coordination complex (preferably containing at least one hydride, hydrocarbyl or substituted hydrocarbyl group able to be abstracted by a Lewis acid) is combined with a Lewis acid having sufficient Lewis acidity to cause abstraction of an anionic ligand of the metal coordination complex thereby forming a cationic derivative thereof (such as tris(perfluorophenyl)-borane).

4. The Polymerization Reaction. The conditions for polymerizing the α-olefin, vinylidene aromatic, and optional diene are generally those useful in the solution polymerization process. High pressure, slurry and gas phase polymerization processes are also believed to be useful, provided the proper catalysts and polymerization conditions are employed.

In general, the polymerization useful in the practice of the subject invention may be accomplished at conditions well known in the prior art for Ziegler-Natta or Kaminsky-Sinn type polymerizations. In particular, the polymerization will typically involve pressures from atmospheric up to 1000 atmospheres (100 MPa) and temperatures from 0°C to 250°C.

While polymerizing and isolating the interpolymer according to the invention, a small amount of atactic vinylidene aromatic homopolymer may be formed due to homopolymerization of the vinylidene aromatic monomer. In general, the higher the polymerization temperature is, the higher is the amount of homopolymer formed. If desired, the vinylidene aromatic homopolymer may be at least partially separated from the said interpolymer, if desired, such as by extraction with a suitable extracting solvent.

The interpolymers according to the present invention may be modified by typical grafting, crosslinking, hydrogenation, functionalizing, or other reactions well known to those skilled in the art, provided that the elastomeric properties of the interpolymers are not substantially affected. The polymers may be readily sulfonated or chlorinated to provide functionalized derivatives according to established techniques.

### Compounding and Curing the said Interpolymers

The thermoset elastomers of the invention may include various additives, such as carbon black, silica, titanium dioxide, colored pigments, clay, zinc oxide, stearic acid, accelerators, curing agents, sulfur, stabilizers, antidegradants, processing aids, adhesives, tackifiers, plasticizers, wax, precrosslinking inhibitors, discontinuous fibers (such as wood cellulose fibers) and extender oils. Such additives may be provided either prior to, during, or subsequent to curing the said interpolymers. The interpolymers are typically mixed with a filler, an oil, and a curing agent at an elevated temperature to compound them. The compounded material is subsequently cured at a temperature which is typically greater than that employed during compounding.

Preferably, carbon black will be added to the interpolymer prior to curing. Carbon black is typically added to improve the tensile strength or toughness of the compounded product, but can also be used as an extender or to mask the color of the compounded product. Carbon black will typically be provided in an amount from 0 to 80 weight percent, typically from 0.5 to 50 weight percent, based on the total weight of the formulation. When the carbon black is employed to mask a color, it is typically employed in the range of 05 to 10 weight percent, based on the weight of the formulation. When the carbon black is employed to increase toughness and/or decrease the cost of the formulation, it is typically employed in amounts greater than 10 weight percent based on the weight of the formulation.

Moreover, preferably, one or more extender oils will be added to the interpolymer prior to curing. Extender oils are typically added to improve processability and low temperature flexabilily, as well as to decrease cost. Suitable extender oils are listed in Rubber World Blue Book 1975 Edition, Materials and Compounding Ingredients for Rubber, pages 145-190. Typical classes of extender oils include aromatic, naphthenic, and paraffinic extender oils. The extender oil(s) will typically be provided in an amount from 0 to 50 weight percent. When employed, the extender oil will typically be provided in an amount of at least 5 weight percent, more typically in an amount of from 15 to 25 weight percent, based on the total weight of the formulation.

In a preferred embodiment, the curing is effected simultaneously with the compounding of the interpolymer.

The curing agent(s) will typically be provided in an amount of from 0.5 to 12 weight percent, based on the total weight of the formulation.

Suitable curing agents include peroxides, phenols, azides, aldehyde-amine reaction products, substituted ureas, substituted guanidines; substituted xanthates; substituted dithiocarbamates; thiazoles, imidazoles, sulfenamides, thiuramidisulfides, paraquinonedioxime, dibenzoparaquinonedioxime, sulfur, and mixtures thereof. See Encyclopedia of Chemical Technology, Vol. 17, 2nd edition, Interscience Publishers, 1968; also Organic Peroxides, Daniel Seern, Vol. 1, Wiley-Interscience, 1970).

Suitable peroxides include aromatic diacyl peroxides; aliphatic diacyl peroxides; dibasic acid peroxides; ketone peroxides; alkyl peroxyesters; alkyl hydroperoxides (for example, diacetylperoxide; dibenzoylperoxide; bis-2,4-dichlorobenzoyl peroxide; di-tert-butyl peroxide; dicumylperoxide; tert-butylperbenzoate; tert-butylcumylperoxide; 2,5-bis(t-butylperoxy)-2,5-dimethylhexane; 2,5-bis (t-butylperoxy)-2,5-dimethylhexyne-3; 4,4,4',4'-tetra-(t-butylperoxy)-2,2-dicyclohexylpropane; 1,4-bis-(t-butylperoxyisopropyl)-benzene; 1,1-bis-(t-butylperoxy)-3,3,5-trimethylcyclohexane; lauroyl peroxide; succinic acid peroxide; cyclohexanone peroxide; t-butyl peracetate; and butyl hydroperoxide.

Suitable phenols are disclosed in USP 4,311,628. One example of a phenolic cure agent is the condensation product of a halogen substituted phenol or a C₁-C₁₀ alkyl substituted phenol with an aldehyde in an alkaline medium, or by condensation of bifunctional phenoldialcohols. One such class of phenolic cure agents is dimethylol phenols substituted in the para position with C₅-C₁₀ alkyl group(s). Also suitable are halogenated alkyl substituted phenol curing agents, and cure systems comprising methylol phenolic resin, a halogen donor, and a metal compound.

Suitable azides include azidoformates, such as tetramethylenebis(azidoformate) (see, also, USP 3,284,421); aromatic polyazides, such as 4,4'-diphenylmethane diazide (see, also, USP 3,297,614); and sulfonazides, such as p,p'-oxybis(benzene sulfonyl azide).

Suitable aldehyde-amine reaction products include formaldehyde-ammonia; formaldehyde-ethylchloride-ammonia; acetaldehyde-ammonia; formaldehyde-aniline; butyraldehyde-aniline; and heptaldehyde-aniline.

Suitable substituted ureas include trimethylthiourea; diethylthiourea; dibutylthiourea; tripentylthiourea; 1,3-bis(2-benzothiazolylmercaptomethyl)urea; and N,N-diphenylthiourea.

Suitable substituted guanidines include diphenylguanidine; di-o-tolylguanidine; diphenylguanidine phthalate; and the di-o-tolylguanidine salt of dicatechol borate.

Suitable substituted xanthates include zinc ethylxanthate; sodium isopropylxanthate; butylxanthic disulfide; potassium isopropylxanthate; and zinc butylxanthate.

Suitable dithiocarbamates include copper dimethyl-, zinc dimethyl-, tellurium diethyl-, cadmium dicyclohexyl-, lead dimethyl-, selenium dibutyl-, zinc pentamethylene-, zinc didecyl-, and zinc isopropyloctyl-dithiocarbamate.

Suitable thiazotes include 2-mercaptobenzothiazole, zinc mercaptothiazolyl mercaptide, 2-benzothiazolyl-N,N-diethylthiocarbamyl sulfide, and 2,2'-dithiobis(benzothiazole).

Suitable imidazoles include 2-mercaptoimidazoline and 2-mercapto-4,4,6-trimethyldihydropyrimidine.

Suitable sulfenamides include N-t-butyl-2-benzothiazole-, N-cyclohexylbenzothiazole-, N,N-diisopropylbenzothiazole-, N-(2,6-dimethylmorpholino)-2-benzothiazole-, and N,N-diethylbenzothiazole-sulfenamide.

Suitable thiuramidisulfides include N,N'-diethyl-, tetrabutyl-, N,N'-diisopropyldioctyl-, tetramethyl-, N,N'-dicyclohexyl-, and N,N'-tetralauryl-thiuramidisulfide.

In the case of interpolymers according to the invention not including the optional diene component, peroxide cure systems are preferred; in the case of interpolymers including the optional diene component, sulfur-based (for example, containing sulfur, a dithiocarbamate, a thiazole, an imidazole, a sulfenamide, a thiuramidisulfide or combinations thereof) and phenolic cure systems are preferred.

### Preparation of Thermoplastic Vulcanizates

The thermoset compositions of the invention may be incorporated into polyolefins to form thermoplastic vulcanizates. The proportions of ingredients utilized will vary somewhat with the particular polyolefin employed, with the desired application, as well as with the character of the crosslinked interpolymer and compounding ingredients. Typically, as the amount of the interpolymer increases, the stiffness of the resultant thermoplastic vulcanizate decreases. The thermoplastic vulcanizates of the invention will typically comprise from 10 to 90 weight percent of the polyolefin and from 10 to 90 weight percent of the crosslinked interpolymer.

Suitable polyolefins include thermoplastic, crystalline, high molecular weight polymers prepared by the polymerization of one or more monoolefins. Examples of suitable polyolefins include ethylene and the isotactic and syndiotactic monoolefin polymer resins, such as propylene, 1-butene, 1-pentene, 1-hexene, 2-methyl-1-propene, 3-methyl-1-pentene, 4-methyl-1-pentene, 5-methyl-1-hexene and mixtures thereof. Most typically, the thermoplastic vulcanizates of the invention will utilize isotactic polypropylene as the polyolefin component.

The thermoplastic vulcanizates of the invention are preferably prepared by dynamic vulcanization, wherein a mixture of the noncrosslinked interpolymer is mixed with the polyolefin resin and an appropriate curing agent to form a blend, which is then masticated at vulcanization temperature. In particular, the noncrosslinked interpolymer is blended with a polyolefin at a temperature above the melting point of the polyolefin. After the interpolymer and polyolefin are intimately mixed, an appropriate curing agent is added, such as are described above with respect to the compounding and curing of the interpolymers. The blend is subsequently masticated using conventional masticating equipment, such as a Banbury mixer, Brabender mixer, or a mixing extruder. The temperature of the blend during mastication is that sufficient to effect vulcanization of the interpolymer. A suitable range of vulcanization temperatures is from the melting temperature of the polyolefin resin ( 120°C in the case of polyethylene and 175°C in the case of polypropylene) to the temperature at which the interpolymer, the polyolefin, or the curing agent degrades. Typical temperatures are from 180°C to 250°C, preferably from 180°C to 200°C.

Methods other than the dynamic vulcanization of the interpolymer/polyolefin are likewise suitable. For instance, the interpolymer may be crosslinked prior to introduction to the polyolefin. The crosslinked interpolymer may then be powdered and mixed with the polyolefin at a temperature above the melting or softening point of the polyolefin. Provided that the crosslinked interpolymer particles are small, well-dispersed, and in an appropriate concentration, (that is, provided an intimate mixture of the crosslinked interpolymer and polyolefin is achieved), the thermoplastic vulcanizates of the invention may be readily obtained. Should such an intimate mixture not be achieved, the resultant product will contain visually observable islands of the crosslinked interpolymer. In this case, the part may be comminuted by pulverizing or by cold milling to reduce particle size to below 50 µm (microns). Upon adequate comminution, the particles may be remolded into a part exhibiting more uniform composition and the enhanced properties characteristic of the thermoplastic vulcanizates of the invention.

The thermoplastic vulcanizates of the invention may include various additives, such as carbon black, silica, titanium dioxide, colored pigments, clay, zinc oxide, stearic acid, accelerators, vulcanizing agents, sulfur, stabilizers, antidegradants, processing aids, adhesives, tackifiers, plasticizers, wax, prevulcanization inhibitors, discontinuous fibers (such as wood cellulose fibers) and extender oils. Such additives may be provided either prior to, during. or subsequent to vulcanization.

As in the case of the thermoset elastomers of the invention, carbon black will preferably be added to the blend of the interpolymer and polyolefin prior to vulcanization. Carbon black will typically be provided in an amount from 0 to 50 weight percent, typically from 0.5 to 50 weight percent, based on the total formulation weight. When the carbon black is employed to mask a color, it is typically employed in the range of 0.5 to 10 weight percent, based on the total weight of the formulation. When the carbon black is employed to increase toughness and/or decrease cost, it is typically employed in amounts greater than 10 weight percent, based on the total weight of the formulation.

Moreover, as in the case of the thermoset elastomers of the invention, one or more extender oils will preferably be added to the blend of the interpolymer and polyolefin prior to vulcanization. Suitable extender oils are listed in Rubber World Blue Book 1975 Edition, Materials and Compounding Ingredients for Rubber, pages 145-190. Typical classes of extender oils include aromatic, naphthenic, and paraffinic extender oils. The extender oil(s) will typically be provided in an amount from 0 to 50 weight percent based on the total formulation weight. When employed, the extender oil will typically be provided in an amount of at least 5 weight percent, more typically in an amount of from 15 to 25 weight percent, based on the total weight of the formulation.

In one preferred embodiment, the thermoplastic vulcanizates of the invention will comprise from 30 to 60 weight percent of the interpolymer, from 15 to 55 weight percent of the thermoplastic polyolefin, and from 15 to 30 weight percent of the extender oil. Such thermoplastic vulcanizates are particularly useful as moldings for automotive applications.

In a particularly preferred embodiment, the thermoplastic vulcanizates of the invention are characterized by an ASTM #2 oil swell of less than 60 percent, as determined by ASTM D-471.

A fabricated part comprises a crosslinked interpolymer of the invention; and a fabricated part comprises the thermoplastic vulcanisate of the invention.

### Test Procedures

Monomer contents are determined by carbon-13 NMR spectroscopy.

Stress-strain properties are determined on an Instron model 1122 load frame using 0.870 inch (2.2 cm) micro-tensile samples measured at an extension rate of 5 inch/min (12.7 cm/min). Tensile break, elongation at break, and 100 percent modulus are measured in accordance with ASTM D-412.

Melt index is measured in accordance with ASTM D-1238.

Molecular weight and molecular weight distribution are determined by gel permeation chromatography.

ASTM #2 and #3 oil swells are measured in accordance with ASTM D-471.

Hardness shore "A" is measured in accordance with ASTM D-2240.

Compression set is measured in accordance with ASTM D-395.

### Example One: Preparation of Ethylene-Styrene Interpolymers and Thermoset Elastomers

Ethylene/styrene copolymers were made using (tert-butylamido)dimethyl(tetramethyl-η5-cyclopenta-dienyl)silane dimethyltitanium(+4) catalyst and tris(pentafluorophenyl)borane cocatalyst in a one to one ratio according to the following procedure. A two liter reactor was charged with 360 grams (500 mL) of ISOPAR™ E mixed alkane solvent (available from Exxon Chemicals Inc.) and the desired amount of styrene comonomer. Hydrogen was added to the reactor by differential pressure-expansion from a 75 mL addition tank. The reactor was heated to the run temperature and was saturated with ethylene at the desired pressure. (Tert-butylamido)dimethyl-(tetramethyl-η5-cyclopentadienyl)silane dimethyltitanium (IV) catalyst and tris(pentafluorophenyl)borane cocatalyst were mixed in a dry box by pipeting the desired amount of a 0.005 M solution of the tris(pentafluorophenyl)borane cocatalyst in ISOPAR™ E mixed alkane solvent or toluene into a solution of the (tert-butylamido)dimethyl-(tetramethyl-η5-cyclopentadienyl)silane dimethyl-titanium (IV) catalyst in ISOPAR™ E mixed alkane solvent or toluene. The resulting catalyst solution was transferred to a catalyst addition tank and was injected into the reactor.

The polymerization was allowed to proceed, with ethylene being introduced on demand. Additional charges of catalyst and cocatalyst, if used, were prepared in the same manner and were added to the reactor periodically. The total amount of catalyst employed was set forth in Table One. In each instance, the amount of tris(pentafluorophenyl)borane cocatalyst (on a molar basis) equals the amount of (tert-butylamido)dimethyl-(tetramethyl-η5-cyclopentadienyl)silane dimethyltitanium (IV) catalyst indicated in Table One. After the run time, the polymer solution was removed from the reactor and quenched with isopropyl alcohol. A hindered phenol antioxidant (IRGANOX™ 1010 (available from Ciba Geigy Corp.) was added to the polymer. Volatiles were removed from the polymer in a reduced pressure vacuum oven at 135°C for 20 hours.

The preparation conditions for the interpolymers were set forth in Table 1.

| Sample | Catalyst amount µ(-mol) | ISOPAR™-E (mL) | Styrene (mL) | Ethylene ((psig)) (MPa g) | Hydrogen ((Δpsi)) (ΔMPa) | Reaction Temp (°C) | Reaction Time (min) | Yeild (g) |
|---|---|---|---|---|---|---|---|---|
| ES-1 | 25 | 250 | 750 | (300) 2.1 | 0 0 | 80 | 10 | 32.3 |
| ES-2 | 3.8 | 500 | 500 | (200) 1.4 | 0 0 | 80 | 10 | 28.8 |
| ES-3 | 15.0 | 500 | 500 | (200) 1.4 | 100 0.7 | 60 | 30 | 166 |

The resultant interpolymers were characterized as being interpolymers which are linear.

The interpolymers were compounded and cured according to the following procedure. The 60 gram bowl of a Brabender PS-2™ internal mixer was preheated to 49°C (120°F), 100 pph carbon black N550™ (available from Cabot Corporation), 50 pph SUNPAR™ 2280 oil (available from Sun Oil), 5 pph paraffin wax, 1 pph stearic acid, 8 pph Vul-Cup 40KE™ peroxide (available from Hercules) and 1.5 pph triallyl cyanurate coagent (available from American Cyanamid) were premixed in a plastic or paper container. The resultant blend was loaded into the 60 gram bowl. To the bowl was further added 100 pph of the desired interpolymer as prepared above. The ram was lowered on the internal mixer, and the compound was allowed to mix until a temperature of 104°C (220°F) was reached (approximately five minutes). The compound was removed from the mixer and was optionally roll-milled.

The samples were compression molded at 127°C (260°F) to obtain uncured (green) test plaques. The uncured (green) test plaques were compression mold cured at 171°C (340°F) for 20 minutes to obtain crosslinked thermoset elastomer compositions.

The stress-strain properties of the neat interpolymers, of the uncured (green) test plaques, and of the crosslinked thermoset elastomer compositions were set forth in Table Two. Therein, the designation "ND" means that the given property was not determined.

| | ES-1 | ES-2 | ES-3 | C1 (Tafmer 680-P) | C2(V-457) | C3(V-707) |
|---|---|---|---|---|---|---|
| COMONOMER CONTENT (AS DIRECTED BY NMR) | | | | | | |
| wt % ethylene | 67.5 | 56.8 | 48.0 | | 51.0 | 70.0 |
| wt % styrene | 32.5 | 432 | 52.0 | | 0 | 0 |
| wt % propylene | 0 | 0 | 0 | | 49.0 | 30.0 |
| STRESS-STRAIN PROPERTIES OF NEAT UNCROSSLINKED POLYMERS | | | | | | |
| tensile at break ((psi)) MPa | (3200) 22 | (2156) 15 | (1390) 9.7 | (668) 4.7 | (243) 1.7 | (887) 6.2 |
| 100% modulus ((psi)) MPa | (759) 5.3 | (445) 3.1 | (256) 1.8 | (170) 1.2 | (75) 0.5 | (205) 1.4 |
| elongation at break (%) | 395 | 420 | 518 | 1115 | 1780 | 1336 |
| melt index at 190°C (g/10 min) | 0.8 | 0.8 | 10.2 | 4.0 | 7.1 | 3.9 |
| Mw/Mn | 2.07 | 2.14 | 3.50 | 21.8 | 3.07 | 4.59 |
| GREEN STRESS-STRAIN PROPERTIES | | | | | | |
| tensile at break ((psi)) MPa | ND | ND | (594) 4.1 | (460) 3.2 | (70) 0.5 | (459) 3.2 |
| 100% modulus ((psi)) (MPa) | ND | ND | (315) 2.2 | (264) 1.8 | (52) 0.4 | (231) 1.6 |
| elongation at break (%) | ND | ND | (453) | (476) | (84) | (685) |
| STRESS-STRAIN PROPERTIES OF CROSSLINKED INTERPOLYMERS | | | | | | |
| tensile at break ((psi)) (MPa) | 3156 | ND | (1005) 7 | (1994) 13.9 | (1236) 8.6 | (1569) 11.1 |
| 100% modulus ((psi)) (MPa) | 1076 | ND | (532) 3.7 | (506) 3.5 | (276) 1.9 | (674) 4.7 |
| elongation at break (%) | 300 | ND | 297 | 383 | 409 | 292 |

As illustrated in Table Two, the crosslinked thermoset elastomer compositions of the invention exhibit a higher 100 % modulus than the comparative materials C1 (Tafmer™ 680-P (available from Mitsui Petrochemical)) and C2 (Vistalon™ 457 (available from Exxon Chemical Co.)). This was consistent with the significantly higher 100 % modulus exhibited by the neat interpolymers as compared to the comparative materials.

### Example Two: Preparation of Ethylene/Styrene/Ethylidene Norbornene Interpolymers and Thermoset Elastomers

Ethylene/styrene/ethylidene norbornene interpolymers were made using (tert-butylamido)dimethyl(tetramethyl-η5-cyclopenta-dienyl)silane dimethyltitanium(+4) catalyst and tris(pentafluorophenyl)borane cocatalyst in a one to one ratio according to the following procedure. A two liter reactor was charged with 360 grams ( 500 mL) of ISOPAR™ E mixed alkane solvent (available from Exxon Chemicals Inc.) and the desired amount of styrene comonomer. Ethylidene norbornene was transferred to the reactor. Hydrogen was added to the reactor by differential pressure expansion from a 75 mL addition tank. The reactor was heated to the run temperature and was saturated with ethylene at the desired pressure. (Tert-butylamido)dimethyl-(tetramethyl-η5-cyclopentadienyl)silane dimethyltitanium (IV) catalyst and tris(pentafluorophenyl)borane cocatalyst were mixed in a dry box by pipetting the desired amount of a 0.005 M solution of the tris(pentafluorophenyl)borane cocatalyst in ISOPAR™ E mixed alkane solvent or toluene into a solution of the (tert-butylamido)dimethyl-(tetramethyl-η5-cyclopentadienyl)silane dimethyl-titanium (IV) catalyst in ISOPAR™ E mixed alkane solvent or toluene. The resulting catalyst solution was transferred to a catalyst addition tank and was injected into the reactor.

The polymerization was allowed to proceed, with ethylene being introduced on demand. Additional charges of catalyst and cocatalyst, if used, were prepared in the same manner and were added to the reactor periodically. The total amount of catalyst employed was reported in Table Three. In each instance, the amount of tris(pentafluoro-phenyl)borane cocatalyst (on a molar basis) was equal to that of the (tert-butylamido)dimethyl-(tetramethyl-η5-cyclopentadienyl)silane dimethyltitanium (IV) catalyst as indicated in Table Three. After the run time, the polymer solution was removed from the reactor and quenched with isopropyl alcohol. A hindered phenol antioxidant (IRGANOX™ 1010 (available from Ciba Geigy Corp.) was added to the polymer. Volatiles were removed from the polymer in a reduced pressure vacuum oven at 135°C for 20 hours.

The preparation conditions for the ethylene/styrene/ethylidene norbornene interpolymers were set forth in Table Three.

| Sample | Catalyst amount (-mol) | ISOPAR -E (mL) | Styrene (mL) | ENB amount (mL) | Ethylene pressure ((psig)) MPa.g | Hydrogen ((psi)) (MPa) | Reaction Temp (°C) | Reaction Time (min) | Yeild (g) |
|---|---|---|---|---|---|---|---|---|---|
| ES-1 | 15 | 500 | 500 | 50 | 250 1.8 | 100 0.7 | 65 | 20 | 149.9 |
| ES-2 | 12.5 | 500 | 500 | 75 | 300 2.1 | 100 0.7 | 65 | 30 | 120.7 |
| ES-3 | 10 | 500 | 500 | 25 | 200 1.4 | 100 0.7 | 65 | 30 | 135.1 |

The resultant interpolymers were characterized as being interpolymers which are linear.

The interpolymers were compounded and cured according to the following procedure. The 60 gram bowl of a Brabender PS-2™ internal mixer was preheated to 49°C (120°F) 100 pph carbon black N550™ (available from Cabot), 50 pph SUNPAR™ 2280 oil (available from Sun Oil), 5 pph paraffin wax, 1 pph stearic acid, 5 pph zinc oxide, 1.5 pph sulfur, and 0.5 pph Captax 2-mercaptobenzothiazole™ (available from R. T. Vanderbilt) were premixed in a plastic or paper container. The resultant blend was loaded into the 60 gram bowl. To the bowl was further added 100 pph of the desired interpolymer as prepared above. The ram was lowered on the internal mixer, and the compound was allowed to mix until a temperature of 104°C (220°F) was reached (approximately five minutes). The compound was removed from the mixer and was optionally roll-milled.

The samples were compression molded at 127°C (260°F) to obtain uncured (green) test plaques. The uncured (green) test plaques were compression mold cured at 171°C (340°F) for 20 minutes to obtain crosslinked thermoset elastomer compositions.

As between ESDM1(a)-(d), ESDM1(a) was prepared in accordance with the above formulation. ESDM1(b)-(d) were likewise prepared in accordance with the above formulation, except that in the case of ESDM1(b), 50 pph SUNDEX 750T™ oil (available from Sun Oil), was used in place of the SUNPAR™ oil; in the case of ESDM1(c), 50 ppb trioctyltrimelliate was used in place of the SUNPAR oil; and in the case of ESDM1(d), 0.75 pph (rather than 1.5 pph) sulfur was employed.

Regarding the comparative materials, C4 was prepared using the formulation provided above, with Vistalon 6505 EPDM™ (available from Exxon) being used in place of the interpolymer. C5 was prepared using the formulation provided above, with EPSyn 70A EPDM™ (available from DSM Copolymer) being used in place of the interpolymer used in the present invention. C6(a) was prepared using the formulation provided above, with SBR 1500 styrene butadiene rubber being used in place of the substantially random/pseudorandom interpolymers and Sundex 750T™ oil (available from Sun Oil) being used in place of the SUNPAR oil™. C6(b) was prepared using the formulation provided above, except that SBR 1500 styrene butadiene rubber was used in place of the interpolymer, 50 pph (rather than 100 pph) N550™ carbon black was employed, 7 pph Sundex 750T oil™ (rather than 50 pph SUNPAR™ 2280 oil) was employed.

The stress-strain properties of the neat interpolymers, of the uncured (green) test plaques, and of the crosslinked thermoset elastomer compositions were set forth in Table Four. Therein, the abbreviation "ND" means that a given property was not determined.

| | ESDM-1 | | | | ESDM-2 | ESDM-3 C4 | | C5 | C6 | |
|---|---|---|---|---|---|---|---|---|---|---|
| COMONOMER CONTENT AS DETERMINED BY (C-NMR) | | | | | | | | | | |
| wt % ethvene | 50.9 | | | | 46.7 | 49.4 | 50 | 50 | 0 | |
| wt % styrene | 35.3 | | | | 43.7 | 44 | 0 | 0 | 24 | |
| wt % diene | 13.8 | | | | 9.6 | 6.6 | 12 | 10 | 0 | |
| wt % propylene | | | | | 0 | 0 | 38 | 40 | 0 | |
| wt % butadiene | | | | | 0 | 0 | 0 | 0 | 76 | |
| STRESS-STRAIN PROPERTIES OF NEAT UNCROSSLINKED INTERPOLYMERS | | | | | | | | | | |
| tensile at break ((psi)) MPa | (1884) 13.1 | | | | (1345) 9.4 | (1021) 7.1 | (83) 0.6 | (80) 0.6 | (31) 0.2 | |
| 100% modulus ((psi)) MPa | (319) 2.2 | | | | (212) 1.5 | (242) 1.7 | (81) 0.6 | (75) 0.5 | (30) 0.2 | |
| elongation at break (%) | 513 | | | | 566 | 505 | 288 | 300 | >400 | |
| melt index (g/10min) | 1.6 | | | | 8.0 | 4.6 | <2.0 | <0.5 | ND | |
| GREEN STRESS-STRAIN PROPERTIES | a | b | c | d | ND | ND | ND | ND | a | b |
| tensile at break (psi) MPa | (869) 5.99 | (723) 4.98 | (859) 5.92 | (932) 6.43 | ND | ND | (78) 0.54 | (80) 0.55 | (3) 0.02 | (61) 0.42 |
| 100% modulus (psi) MPa | (570) 3.93 | (457) 3.15 | (606) 4.18 | (469) 3.23 | ND | ND | (32) 0.22 | (67) 0.46 | (14) 0.97 | (51) 0.35 |
| elongation at break (%) | 338 | 395 | 276 | 369 | ND | ND | 250 | 130 | 2129 | 300 |
| STRESS-STRAIN AND OIL RESISTANCE PROPERTIES COMPOUNDED CROSS-LINKED INTERPOLYMERS | a | b | c | d | | | | | a | b |
| tensile at break (%) | 2379 | 2279 | 2451 | 2033 | ND | ND | 2044 | 2399 | 1575 | 1475 |
| 100% modulus | 1455 | 1395 | 1539 | 1018 | ND | ND | 598 | 533 | 295 | 386 |
| elongation at break (%) | 188 | 219 | 183 | 246 | ND | ND | 318 | 401 | 277 | 392 |
| ASTM #2 oil swell (70 hours @ 212°F) | 54 | 55 | 54 | 62 | ND | ND | 93 | 100 | 57 | 49 |
| STRESS STRAIN PROPERTIES AFTER AN OVEN AGING FOR 70 HOURS AT (250°F) 118°C | a | b | c | d | | | | | a | b |
| tensile at break ((psi)) MPa | (2697 18.1 | 2907 20.3 | ND ND | 2507) 17.5 | ND | ND | ND | ND | (663 4.6 | 1352) 9.4 |
| 100% modulus (psi) MPa | (2143 14.9 | ND ND | ND ND | 1401) 9.8 | ND | ND | ND | ND | (ND ND | (1326) 9.2 |
| elongation at break (%) | 34 | 84 | ND | 199.6 | ND | ND | ND | ND | 93 | 103 |
| PERCENT CHANGE IN STRESS-STRAIN PROPERTIES AFTER OVEN AGING 70 HOURS AT (250°F) 118°C | a | b | c | d | | | | | a | b |
| tensile at break (%) | +15 | +28 | ND | +24 | ND | ND | ND | ND | -58 | -8 |
| 100% modulus (%) | -47 | ND | ND | +38 | ND | ND | ND | ND | ND | +378 |
| elongation at break (%) | -29 | -62 | ND | -19 | ND | ND | ND | ND | -76 | -74 |

As illustrated in Table Four, the crosslinked thermoset elastomers of the invention typically exhibit a highly improved 100% modulus, as compared to comparative materials C4 (VistalonTM 6505 EPDM (available from Exxon)), C5 (EPSyn 70A EPDM (available from DSM Copolymer)) and C6 (SBR 1500 styrene-butadiene rubber).

As further illustrated in Table Four, the crosslinked thermoset elastomers of the invention typically exhibit a resistance to oil swell similar to that of styrene-butadiene-rubber, but superior to that of EPDM materials.

As further illustrated in Table Four, the crosslinked thermoset elastomers of the invention exhibit aging properties superior to those of styrene-butadiene rubber. For instance, upon aging at (250°F) 118°C for 70 hours in an air oven, the crosslinked ethylene/styrene/ethylidene norbornene interpolymer exhibited increased tensile at break values and moderately decreased elongation at break values. In contrast, upon oven aging under the same conditions, the styrene-butadiene rubbers exhibited decreased tensile at break values and significantly decreased elongation at break values.

Thus, as illustrated in Table Four, the crosslinked ethylene/styrene/diene thermoset elastomers of the invention exhibit a resistance to oil swell characteristic of styrene-butadiene rubber without suffering the concomitant negative effects of heat aging.

### Example Three: Preparation of Thermoplastic Vulcanizates

The Brabender PS-2™ or Haake™ internal torque mixer was preheated to 350°C. The desired amount of Pro-fax 6524 isotactic polypropylene (available from Himont Incorporated) was added to the mixer, and was allowed to melt and to homogenize. Over one minute, the desired amount of the noncrosslinked substantially random/pseudorandom interpolymer was added. Thereafter, the process oil, antioxidant, stearic acid, and carbon black were added and mixed for one minute. The zinc oxide, sulfur, benzothiazyldisulfide and methyl tuads™ were added. Mixing occurs until the torque reaches a maximum and for at least 10 minutes total mix time. The resultant thermoplastic vulcanizate was removed from the mixer.

In executing the above procedure, the formulations set forth in Table Five were employed. Unless otherwise indicated, all amounts were expressed in parts per hundred, based on 100 parts of the elastomer.

| Elastomer | TPV-1 | TPV-2 | | | | C-TPV-1 | C-TPV-2 |
|---|---|---|---|---|---|---|---|
| | ESDM-2 | ESDM-3 | | | | C-4 | C-5 |
| wt % ethylene | 46.7 | 49.4 | | | | 50 | 50 |
| wt % styrene | 43.7 | 44 | | | | 0 | 0 |
| wt % diene | 9.6 | 6.6 | | | | 12 | 10 |
| wt % propylene | 0 | 0 | | | | 38 | 40 |
| TPV formulation (all amounts in pph) | | A | B | C | D | | |
| Substantially random interpolymer | 100 | 100 | 100 | 100 | 100 | 100 | 100 |
| isotactic polypropylene | 67 | 67 | 33 | 67 | 100 | 67 | 67 |
| process oil | 50 | 50 | 100 | 100 | 100 | 50 | 50 |
| IRGANOX 1010 antioxidant (available from Ciba Geigy Corp.) | 3 | 3 | 3 | 3 | 3 | 3 | 3 |
| stearic acid | 1 | 1 | 1 | 1 | 1 | 1 | 1 |
| N550 carbon black available from Cabot | 1 | 1 | 1 | 1 | 1 | 1 | 1 |
| zinc oxide | 5 | 5 | 5 | 5 | 5 | 5 | 5 |
| sulfur | 1.5 | 1.5 | 1.5 | 1.5 | 1.5 | 1.5 | 1.5 |
| benzothiazyldisulfide (available from Altax) | 0.38 | 038 | 0.38 | 0.38 | 038 | 038 | 038 |
| methyl tuads™ | 0.75 | 0.75 | 0.75 | 0.75 | 0.75 | 0.75 | 0.75 |

Except in the case of TPV1(b), SunParTM 2280 (available from Sun Oil) was employed as the process oil. For TPV1(b), trioctyltrimelliate was employed as the process oil.

The resultant thermoplastic vulcanizates were compression molded at 193°C (380°F). Representative physical properties of the thermoplastic vulcanizates and of comparative thermoplastic vulcanizates C-TPV 1 (made with Vistalon 6505 EPDM (available from Exxon)) and C-TPV2 (made with EPSyn 70A EPDM (available from DSM Rubber)) were set forth in Table Six. Therein, the abbreviation "ND" means that a given property was not determined.

| | TPV 1 | | TPV 2 | | | | C-TPV-1 | C-TPV-2 |
|---|---|---|---|---|---|---|---|---|
| Stress-Strain properties | A | B | A | B | C | D | | |
| tensile at break (psi) MPa | (1507 10.5 | 1589 11.1 | 1621 11.3 | 515 3.6 | 1549 10.8 | 1436 10 | 1520 10.6 | 1787 12.5 |
| 100% modulus (psi) MPa | (1375 9.6 | 1307 9.1 | 951 6.6 | 327 2.3 | 691 4.8 | 1008 7.0 | 759 5.3 | 889 6.2 |
| elongation at break (%) | 132 | 164 | 251 | 192 | 336 | 247 | 322 | 344 |
| ASTM #2-70 hours at 100°C (212°F) (% swell) | ND | ND | 109.5 | 133.8 | 89.3 | 68.2 | ND | ND |
| Hardness Shore "A" | 88 | 86 | 86 | 63 | 77 | 83 | 90 | 88 |

A comparison of TPV1(a) and TPV2(a) with comparative materials C-TPV1 (made with Vistalon 6505 EPDM (available from Exxon)) and C-TPV2 (made with EPSyn 70A EPDM (available from DSM Rubber)) indicates that the thermoplastic vulcanizates of the invention exhibit a much greater resistance to oil swell (under the ASTM #2 test method) than the comparative materials without sacrificing hardness (Hardness Shore "A"). A comparison of these materials further indicates that the thermoplastic vulcanizates of the invention exhibit improved 100% modulus values and comparable tensile at break values, with respect to the comparative materials.

A comparison of TPV-2(b), TPV-2(c), and TPV-2(d) indicates that one can adjust resistance to ASTM #2 oil swell and hardness values by adjusting the ratio between the polypropylene and the interpolymer. Namely, as the proportion of the polypropylene increases, the resistance to ASTM #2 oil swell and hardness likewise increase. Moreover, the effect of the added interpolymer was evident In particular, the percent elongation at break of the inventive thermoplastic vulcanizates was many times greater than that of unmodified isotactic polypropylene, which exhibits a percent elongation at break of 13 percent.

The thermoset elastomers of the invention were useful in a variety of applications. Exemplary applications include hoses, air ducts, brake cups, roofing materials, as well as use as components in blends as impact modifiers and in general molded goods.

The thermoplastic vulcanizates were likewise useful in a variety of applications, particularly articles made by extrusion, injection molding and compression molding techniques. One principal application for the TPVS of the invention was in automotive under-the-hood components, such as rack-and-pinion boots and ducting, fuel-line covers, hoses, belts, and gaskets. Other expected automotive applications were in interior applications (such as skins, instrument panels, air-bag covers, door trim, control knobs, molded parts, and seat belt covers) and exterior applications (such as tires and molding).

## Claims

1. A thermoset elastomer comprising a crosslinked interpolymer of:
(a) from 15 to 70 weight percent of at least one α-olefin
(b) from 30 to 70 weight percent of at least one vinylidene aromatic compound, and
(c) from 0 to 15 weight percent of at least one diene, wherein the distribution of the monomers of the interpolymer is described by the Bernoullian statistical model or by a first or second order Markovian statistical model.

2. The thermoset elastomer of Claim 1, wherein the phenyl or substituted phenyl groups of the vinylidene aromatic compound are separated by two or more carbon backbone units.

3. The thermoset elastomer of Claims 1 or 2, wherein the crosslinked interpolymer is comprised of:
(a) from 25 to 60 weight percent of at least one α-olefin,
(b) from 35 to 60 weight percent of at least one vinylidene aromatic compound, and
(c) from 3 to 15 weight percent of at least one diene.

4. The thermoset elastomer of Claims 1, 2 or 3, wherein the crosslinked interpolymer is comprised of:
(a) from 40 to 65 weight percent of at least one α-olefin selected from the group consisting of ethylene, propylene, 1-butene, 3-methyl-1-butene, 1-pentene, 4-methyl-1-pentene, 1-hexene, 5-methyl-1-hexene, 4-ethyl-1-hexene, 1-octene, 1-dodecene, 3-phenylpropene, and mixtures thereof; and
(b) from 35 to 60 weight percent of at least one vinylidene aromatic compound selected from the group consisting of styrene, α-methylstyrene, ortho-methylstyrene, meta-methylstyrene, para-methylstyrene, chlorostyrene, vinylbenzocyclobutane and divinylbenzene, and mixtures thereof.

5. The thermoset elastomer of any one of Claims 1-4, wherein:
(a) the α-olefin is selected from the group consisting of ethylene, propylene, 1-butene, 3-methyl-1-butene, 1-pentene, 4-methyl-1-pentene, 1-hexene, 5-methyl-1-hexene, 4-ethyl-1-hexene, 1-octene, 1-dodecene, 3-phenylpropene, and mixtures thereof; and
(b) the vinylidene aromatic compound is selected from the group consisting of styrene, α-methylstyrene, ortho-methylstyrene, meta-methylstyrene, para-methylstyrene, chlorostyrene, vinylbenzocyclobutane and divinylbenzene, and mixtures thereof; and
(c) the diene, when present, is selected from the group consisting of butadiene, 1,3-pentadiene, 1,4-pentadiene, isoprene, 1,4-hexadiene, 7-methyl-1,6-octadiene, dicyclopentadiene, methylenenorbornene, ethylidenenorbornene, and methyltetrahydroindene, and mixtures thereof.

6. The thermoset elastomer of Claim 5, wherein the α-olefin is ethylene, the vinylidene aromatic compound is styrene, and the diene, when present, is ethylidenenorbornene.

7. A process for preparing a thermoset elastomer comprising:
(a) reacting at least one α-olefin with at least one vinylidene aromatic compound and optionally at least one diene, in the presence of a constrained geometry catalyst, to form an interpolymer, wherein the distribution of the monomers is described by the Bernoullian statistical model or by a first or second order Markovian statistical model; and
(b) curing the said interpolymer to form a thermoset elastomer.

8. The process of Claim 7, wherein the constrained geometry catalyst is a metal coordination complex comprising a metal of Group III or IV or the Lanthanide series of the Periodic Table of the Elements and a delocalized Π-bonded moiety substituted with a constrain-inducing moiety, said complex having a constrained geometry the metal atom such that the angle at the metal between the centroid of the delocalized, substituted Π-bonded moiety and the center of at least one remaining substituent is less than such angle in a similar complex containing a similar Π-bonded moiety lacking in such constrain-inducing substituent, and provided further that for such complexes comprising more than one delocalized, substituted Π-bonded moiety, only one thereof for each metal atom of the complex is a cyclic, delocalized, substituted Π-bonded moiety.

9. The process of Claim 7, wherein the constrained geometry catalyst is selected from the group consisting of (tert-butylamido)(tetramethyl-η5-cyclopentadienyl)-1,2-ethanediylzirconium dichloride; tert-butylamido) (tetramethyl-η5-cyclopentadienyl)-1,2-ethanediyltitanium dichloride; (tert-butylamido) dimethyl(tetramethyl-η5-cyclopentadienyl) silanetitanium dimerthyl; (tert-butylamido) dimethyl(tetramethyl-η5-tetrahydroindenyl silanetitanium dimethyl; (tert-butylamido) dimethyl(tetramethyl-η5-tetrahydrofluorenyl)silanetitanium dimethyl; (tert-butylamido) dimethyl (tetramethyl-η5-octahydrofluorenyl) silanetitanium dimethyl; (tert-butylamido) dimethyl(tetramethyl-η5-cyclopentadienyl) silanetitanium dibenzyl; (tert-butylamido) dimethyl (tetramethyl-η5-cyclopentadienyl) silanezirconium dibenzyl; and mixtures thereof.

10. The process of Claim 7, comprising activating the constrained geometry catalyst by a cocatalyst selected from the group consisting of polymeric alumoxanes, oligomeric alumcxanes, polymeric carbylboranes, oligomeric carbylboranes, monomeric carbylboranes, aluminum alkyls, aluminum halides, haloaluminum alkyls, substituted ammonium salts, silver salts, ferrocenium ions, and mixtures thereof.

11. The process of Claim 7, wherein the constrained geometry catalyst is activated by tris(pentafluorophenyl)-borane.

12. The process of Claim 7, wherein the curing is effected by a curing agent selected from the group consisting of peroxides, phenols, azides, aldehyde-amine reaction products, substituted ureas, substituted guanidines, substituted xanthates, substituted dithiocarbamates, thiazoles, imidazoles, sulfenamides, thiuramidisulfides, paraquinonedioxime, dibenzoparaquinonedioxime, and sulfur.

13. The process of Claim 7, wherein the curing is effected by a curing agent selected from the group consisting of peroxides, phenols, substituted dithiocarbamates, thiazoles, imidazoles, sulfenamides, thiuramidisulfides, sulfur and mixtures thereof.

14. The process of Claim 7, wherein the curing is effected simultaneously with the compounding of the interpolymer.

15. The process of any one of Claims 7-14, wherein
(i) the α-olefin is selected from the group consisting of ethylene, propylene, 1-butene, 1-pentene, 1-hexene, 4-methyl-1-pentene, 5-methyl-1-hexene, 4-ethyl-1-hexene, 1-octene, 3-phenylpropene, and mixtures thereof;
(ii) the vinylidene aromatic compound is selected from the groups consisting of styrene, α-methylstyrene, ortho-methylstyrene, meta-methylstyrene, para-methylstyrene, chlorostyrene, vinylbenzocyclobutane, divinylbenzene and mixtures thereof; and
(iii) the diene, when present, is selected from the group consisting of butadiene, 1,3-pentadiene, 1,4-pentadiene, isoprene, 1,4-hexadiene, 7-methyl-1,6-octadiene, dicyclopentadiene, methylenenorbornene, ethylidenenorbornene and mixtures thereof.

16. A thermoplastic vulcanizate comprising:
(a) the crosslinked interpolymer as defined in any one of Claims 1-6; and
(b) at least one thermoplastic polyolefin.

17. The thermoplastic vulcanizate of Claim 16, comprising from 10 to 90 weight percent of the crosslinked interpolymer and from 10 to 90 weight percent of the thermoplastic polyolefin.

18. The thermoplastic vulcanizate of Claim 16, further comprising from 0 to 50 weight percent of an extender oil selected from the group consisting of aromatic oils, naphthenic oils, and paraffinic oils.

19. The thermoplastic vulcanizate of any one of Claims 16-18, comprising from 30 to 60 weight percent of the crosslinked interpolymer, from 15 to 55 weight percent of the thermoplastic polyolefin, and from 15 to 30 weight percent of the extender oil.

20. The thermoplastic vulcanizate according to claim 16 being characterized by an ASTM #2 oil swell of less than 60 percent, as determined by ASTM D-471.

21. A process for making a thermoplastic vulcanizate comprising:
(a) reacting at least one α-olefin with at least one vinylidene aromatic compound and optionally at least one diene in the presence of a constrained geometry catalyst to form an interpolymer, wherein the distribution of the monomers is described by the Bernoulian statistical model or by a first or second order Markovian statistical model;
(b) intimately mixing the interpolymer with at least one thermoplastic polyolefin at a temperature above the melting or softening point of the thermoplastic polyolefin;
(c) providing to the intimate mixture an agent for curing the interpolymer;
(d) simultaneously curing the interpolymer and compounding the intimate mixture to form a thermoplastic vulcanizate.

22. The process of Claim 21, wherein
(i) the α-olefin is selected from the group consisting of ethylene, propylene, 1-butene, 1-pentene, 1-hexene, 4-methyl-1-pentene, 5-methyl-1-hexene, 4-ethyl-1-hexene, 1-octene, 3-phenylpropene, and mixtures thereof;
(ii) the vinylidene aromatic compound is selected from the group consisting of styrene, α-methylstyrene, ortho-methylstyrene, meta-methylstyrene, para-methylstyrene, chlorostyrene, vinylbenzocyclobutane, divinylbenzene, and mixtures thereof; and
(iii) the optical diene is selected from the group consisting of butadiene, 1,3-pentadiene, 1,4 pentadiene, isoprene, 1,4-hexadiene, 7-methyl-1,6-octadiene, dicyclopentadiene, methylenenorbornene, ethylidenenorbornene, methyltetrahydroindene, and mixtures thereof.

23. The process of Claim 21, wherein the thermoplastic polyolefin is selected from the group of ethylene, propylene, 1-butene, 1-pentene, 1-hexene, 2 methyl-1-propene, 3-methyl-1-pentene, 4-methyl-1-hexene, 5-methyl-1-hexene, and mixtures thereof.

24. The process of Claim 21, wherein the agent for curing the said interpolymer is selected from the group consisting of peroxides, phenols, azides, aldehydeamine reaction products, substituted ureas, substituted guanidines, substituted xanthates, substituted dithiocarbamates, thiazoles, imidazoles, sulfenamides, thiuramidisulfides, paraquinonedioxime, dibenzoparaquinonedioxime, sulfur, and mixtures thereof.

25. The process of any one of Claims 21-24, wherein the constrained geometry catalyst is a metal coordination complex comprising a metal of Group III or IV or the Lanthanide series of the Periodic Table of the Elements and a delocalized Π-bonded moiety substituted with a constrain-inducing moiety, said complex having a constrained geometry the metal atom such that the angle at the metal between the centroid of the delocalized, substituted Π-bonded moiety and the center of at least one remaining substituent is less than such angle in a similar complex containing a similar Π-bonded moiety lacking in such constrain-inducing substituent, and provided further that for such complexes comprising more than one delocalized, substituted Π-bonded moiety, only one thereof for each metal atom of the complex is of cyclic, delocalized, substituted Π-bonded moiety.

26. The process of Claim 25, comprising activating the constrained geometry catalyst by a cocatalyst selected from the group consisting of polymeric alumoxanes, oligomeric alumoxanes, polymeric carbylboranes, oligomeric carbylboranes, monomeric carbylboranes, aluminum alkyls, aluminum halides, haloaluminum alkyls, substituted ammonium salts, silver salts, ferrocenium ions, and mixtures thereof.

27. A fabricated part comprising a crosslinked interpolymer as defined in Claim 1.

28. A fabricated part comprising a thermoplastic vulcanizate as defined in Claim 17.

## Patentansprüche

1. Wärmehärtbares Elastomer, umfassend ein quervernetztes Interpolymer aus:
(a) von 15 bis 70 Gewichtsprozent von mindestens einem α-Olefin,
(b) von 30 bis 70 Gewichtsprozent von mindestens einer vinylidenaromatischen Verbindung und
(c) von 0 bis 15 Gewichtsprozent von mindestens einem Dien, worin die Verteilung der Monomere des Interpolymers durch das statistische Modell von Bernoulli oder durch ein statistisches Modell einer ersten oder zweiten Ordnung von Markov beschrieben ist.

2. Wärmehärtbares Elastomer nach Anspruch 1, worin die Phenyl- oder substituierten Phenylgruppen der vinylidenaromatischen Verbindung durch zwei oder mehr Kohlenstoffgrundgerüsteinheiten getrennt sind.

3. Wärmehärtbares Elastomer nach Anspruch 1 oder 2, worin das quervernetzte Interpolymer aufgebaut ist aus:
(a) 25 bis 60 Gewichtsprozent von mindestens einem α-Olefin,
(b) von 35 bis 60 Gewichtsprozent von mindestens einer vinylidenaromatischen Verbindung und
(c) von 3 bis 15 Gewichtsprozent von mindestens einem Dien.

4. Wärmehärtbares Elastomer nach Anspruch 1, 2 oder 3, worin das quervernetzte Interpolymer aufgebaut ist aus:
(a) von 40 bis 65 Gewichtsprozent von mindestens einem α-Olefin, ausgewählt aus der Gruppe, bestehend aus Ethylen, Propylen, 1-Buten, 3-Methyl-1-buten, 1-Penten, 4-Methyl-1-penten, 1-Hexen, 5-Methyl-1-hexen, 4-Ethyl-1-hexen, 1-Octen, 1-Dodecen, 3-Phenylpropen und Gemischen davon; und
(b) von 35 bis 60 Gewichtsprozent von mindestens einer vinylidenaromatischen Verbindung, ausgewählt aus der Gruppe, bestehend aus Styrol, α-Methylstyrol, ortho-Methylstyrol, meta-Methylstyrol, para-Methylstyrol, Chlorstyrol, Vinylbenzocyclobutan und Divinylbenzol und Gemischen davon.

5. Wärmehärtbares Elastomer nach einem der Ansprüche 1 bis 4 worin:
(a) das A-Olefin ausgewählt ist aus der Gruppe, bestehend aus Ethylen, Propylen, 1-Buten, 3-Methyl-1-buten, 1-Penten, 4-Methyl-1-penten, 1-Hexen, 5-Methyl-1-hexen, 4-Ethyl-1-hexen, 1-Octen, 1-Dodecen, 3-Phenylpropen und Gemischen davon; und
(b) die vinylidenaromatische Verbindung ausgewählt ist aus der Gruppe, bestehend aus Styrol, α-Methylstyrol, ortho-Methylstyrol, meta-Methylstyrol, para-Methylstyrol, Chlorstyrol, Vinylbenzocyclobutan und Divinylbenzol und Gemischen davon; und
(c) das vorliegende Dien, wenn vorhanden, ausgewählt ist aus der Gruppe, bestehend aus Butadien, 1,3-Pentadien, 1,4-Pentadien, Isopren, 1,4-Hexadien, 7-Methyl-1,6-octadien, Dicyclopentadien, Methylennorbornen, Ethylidennorbornen und Methyltetrahydroinden und Gemischen davon.

6. Wärmehärtbares Elastomer nach Anspruch 5, worin das α-Olefin Ethylen ist, die vinylidenaromatische Verbindung Styrol ist und das Dien, wenn vorhanden, Ethylidennorbornen ist.

7. Verfahren zum Herstellen eines wärmehärtbaren Elastomers, umfassend:
(a) Umsetzen von mindestens einem α-Olefin mit mindestens einer vinylidenaromatischen Verbindung und gegebenenfalls mindestens einem Dien, in der Gegenwart eines Katalysators mit erzwungener Geometrie, um ein Interpolymer zu bilden, worin die Verteilung des Monomers durch das statistische Modell von Bernoulli oder das statistische Modell erster oder zweiter Ordnung von Markov beschrieben ist; und
(b) Vernetzen des Interpolymers, um ein wärmehärtbares Elastomer zu bilden.

8. Verfahren nach Anspruch 7, worin der Katalysator mit erzwungener Geometrie ein Metallkoordinationskomplex ist, der ein Metall der Gruppe III oder IV oder der Lanthanidenreihe des Periodensystems der Elemente und einen delokalisierten π-gebundenen Rest, der mit einem Zwang induzierenden Rest substituiert ist, umfaßt, wobei der Komplex eine erzwungene Geometrie des Metallatoms aufweist, so daß der Winkel am Metall zwischen dem Zentroid des delokalisierten, substituierten π-gebundenen Restes und dem Zentrum von mindestens einem verbleibenden Substituenten geringer ist als ein solcher Winkel in einem ähnlichen Komplex, der einen ähnlichen π-gebundenen Rest ohne einen solchen zwanginduzierenden Substituenten aufweist, und mit der weiteren Maßgabe, daß für derartige Komplexe, die mehr als einen delokalisierten substituierten π-gebundenen Rest aufweisen, nur einer davon für jedes Metallatom des Komplexes ein cyclischer, delokalisierter, substituierter π-gebundener Rest ist.

9. Verfahren nach Anspruch 7, worin der Katalysator mit erzwungener Geometrie ausgewählt wird aus der Gruppe, bestehend aus (tert-Butylamido) (tetramethyl-η5-cyclopentadienyl)-1,2-ethandiylzirkoniumdichlorid; (tert-Butylamido) (tetramethyl-η5-cyclopentadienyl)-1,2-ethandiyltitandichlorid; (tert-Butylamido)dimethyl(tetramethyl-η5-cyclopentadienyl)silantitandimethyl; (tert-Butylamido)dimethyl(tetramethyl-η5-tetrahydroindenylsilantitandimethyl; (tert-Butylamido)dimethyl(tetramethyl-η5-tetrahydrofluorenyl)silantitandimethyl; (tert-Butylamido)dimethyl(tetramethyl-η5-octahydrofluorenyl)silantitandimethyl; (tert-Butylamido)dimethyl(tetramethyl-η5-cyclopentadienyl)silantitandibenzyl; (tert-Butylamido)dimethyl(tetramethyl-η5-cyclopentadienyl)silanzirkoniumdibenzyl; und Gemische davon.

10. Verfahren nach Anspruch 7, umfassend das Aktivieren des Katalysators mit erzwungener Geometrie durch einen Cokatalysator, ausgewählt aus der Gruppe, bestehend aus polymeren Alumoxanen, oligomeren Alumoxanen, polymeren Carbylboranen, oligomeren Carbylboranen, monomeren Carbylboranen, Aluminiumalkylen, Aluminiumhalogeniden, Haloaluminiumalkylen, substituierten Ammoniumsalzen, Silbersalzen, Ferroceniumionen und Gemischen davon.

11. Verfahren nach Anspruch 7, worin der Katalysator mit erzwungener Geometrie durch Tris(pentafluorphenyl)-boran aktiviert wird.

12. Verfahren nach Anspruch 7, worin das Vernetzen bewirkt wird durch ein Vernetzungsmittel, ausgewählt aus der Gruppe, bestehend aus Peroxiden, Phenolen, Aziden, Aldehydamin-Reaktionsprodukten, substituierten Harnstoffen, substituierten Guanidinen, substituierten Xanthaten, substituierten Dithiocarbamaten, Thiazolen, Imidazolen, Sulfenamiden, Thiuramidisulfiden, Parachinondioxim, Dibenzoparachinondioxim und Schwefel.

13. Verfahren nach Anspruch 7, worin das Vernetzen durch ein Vernetzungsmittel bewirkt wird, ausgewählt aus der Gruppe, bestehend aus Peroxiden, Phenolen, substituierten Dithiocarbamaten, Thiazolen, Imidazolen, Sulfenamiden, Thiaruamidisulfiden, Schwefel und Gemischen davon.

14. Verfahren nach Anspruch 7, worin das Vernetzen gleichzeitig mit dem Compounden des Interpolymers bewirkt wird.

15. Verfahren nach einem der Ansprüche 7 bis 14, worin
(i) das α-Olefin ausgewählt wird aus der Gruppe, bestehend aus Ethylen, Propylen, 1-Buten, 1-Penten, 1-Hexen, 4-Methyl-1-penten, 5-Methyl-1-hexen, 4-Ethyl-1-hexen, 1-Octen, 3-Phenylpropen und Gemischen davon;
(ii) die vinylidenaromatische Verbindung ausgewählt wird aus den Gruppen, bestehend aus Styrol, α-Methylstyrol, ortho-Methylstyrol, meta-Methylstyrol, para-Methylstyrol, Chlorstyrol, Vinylbenzocyclobutan, Divinylbenzol und Gemischen davon; und
(iii) das Dien, wenn vorhanden, ausgewählt wird aus der Gruppe, bestehend aus Butadien, 1,3-Pentadien, 1,4-Pentadien, Isopren, 1,4-Hexadien, 7-Methyl-1,6-octadien, Dicyclopentadien, Methylennorbornen, Ethylidennorbornen und Gemischen davon.

16. Thermoplastisches Vulkanisat, umfassend:
(a) das quervernetzte Interpolymer nach einem der Ansprüche 1 bis 6; und
(b) mindestens ein thermoplastisches Polyolefin.

17. Thermoplastisches Vulkanisat nach Anspruch 16, umfassend von 10 bis 90 Gewichtsprozent des quervernetzten Interpolymers und von 10 bis 90 Gewichtsprozent des thermoplastischen Polyolefins.

18. Thermoplastisches Vulkanisat nach Anspruch 16, weiterhin umfassend von 0 bis 50 Gewichtsprozent eines Extenderöls, ausgewählt aus der Gruppe, bestehend aus aromatischen Ölen, naphthenischen Ölen und paraffinischen Ölen.

19. Thermoplastisches Vulkanisat nach einem der Ansprüche 16 bis 18, umfassend von 30 bis 60 Gewichtsprozent des quervernetzten Interpolymers, von 15 bis 55 Gewichtsprozent des thermoplastischen Polyolefins und von 15 bis 30 Gewichtsprozent des Extenderöls.

20. Thermoplastisches Vulkanisat nach Anspruch 16, gekennzeichnet durch eine ASTM #2 Ölquellung von weniger als 60 Prozent, gemäß Bestimmung durch ASTM D-471.

21. Verfahren zum Herstellen eines thermoplastischen Vulkanisats, umfassend:
(a) Umsetzen von mindestens einem α-Olefin mit mindestens einer vinylidenaromatischen Verbindung und gegebenenfalls mit mindestens einem Dien in der Gegenwart eines Katalysators mit erzwungener Geometrie, um ein Interpolymer zu bilden, worin die Verteilung der Monomere durch das statistische Modell von Bernoulli oder durch ein statistisches Modell erster oder zweiter Ordnung von Markov beschrieben wird;
(b) inniges Mischen des Interpolymers mit mindestens einem thermoplastischen Polyolefin bei einer Temperatur oberhalb des Schmelz- oder Erweichungspunktes des thermoplastischen Polyolefins;
(c) Zuführen eines Mittels zum Vernetzen des Interpolymers zu dem innigen Gemisch;
(d) gleichzeitiges Vernetzen des Interpolymers und Compounden des innigen Gemisches, um ein thermoplastisches Vulkanisat zu bilden.

22. Verfahren nach Anspruch 21, worin
(i) das α-Olefin ausgewählt wird aus der Gruppe, bestehend aus Ethylen, Propylen, 1-Buten, 1-Penten, 1-Hexen, 4-Methyl-1-penten, 5-Methyl-1-hexen, 4-Ethyl-1-hexen, 1-Octen, 3-Phenylpropen und Gemischen davon;
(ii) die vinylidenaromatische Verbindung ausgewählt wird aus der Gruppe, bestehend aus Styrol, α-Methylstyrol, ortho-Methylstyrol, meta-Methylstyrol, para-Methylstyrol, Chlorstyrol, Vinylbenzocyclobutan, Divinylbenzol und Gemischen davon; und
(iii) das gegebenenfalls vorliegende Dien ausgewählt wird aus der Gruppe, bestehend aus Butadien, 1,3-Pentadien, 1,4-Pentadien, Isopren, 1,4-Hexadien, 7-Methyl-1,6-octadien, Dicyclopentadien, Methylennorbornen, Ethylidennorbornen, Methyltetrahydroinden und Gemischen davon.

23. Verfahren nach Anspruch 21, worin das thermoplastische Polyolefin ausgewählt wird aus der Gruppe Ethylen, Propylen, 1-Buten, 1-Penten, 1-Hexen, 2-Methyl-1-propen, 3-Methyl-1-penten, 4-Methyl-1-hexen, 5-Methyl-1-hexen und Gemischen davon.

24. Verfahren nach Anspruch 21, worin das Mittel zum Vernetzen des Interpolymers ausgewählt wird aus der Gruppe, bestehend aus Peroxiden, Phenolen, Aziden, Aldehydamin-Reaktionsprodukten, substituierten Harnstoffen, substituierten Guanidinen, substituierten Xanthaten, substituierten Dithiocarbamaten, Thiazolen, Imidazolen, Sulfenamiden, Thiuramidisulfiden, Parachinondioxim, Dibenzoparachinondioxim, Schwefel und Gemischen davon.

25. Verfahren nach einem der Ansprüche 21 - 24, worin der Katalysator mit erzwungener Geometrie ein Metallkoordinationskomplex ist, der ein Metall der Gruppe III oder IV oder der Lanthanidenreihe des Periodensystems der Elemente und einen delokalisierten π-gebundenen Rest, der mit einem Zwang induzierenden Rest substituiert ist, umfaßt, wobei der Komplex eine erzwungene Geometrie des Metallatoms aufweist, so daß der Winkel am Metall zwischen dem Zentroid des delokalisierten, substituierten π-gebundenen Restes und dem Zentrum von mindestens einem verbleibenden Substituenten geringer ist als ein solcher Winkel in einem ähnlichen Komplex, der einen ähnlichen π-gebundenen Rest ohne einen solchen Zwang induzierenden Substituenten aufweist, und mit der weiteren Maßgabe, daß für derartige Komplexe die mehr als einen delokalisierten substituierten π-gebundenen Rest aufweisen, nur einer davon für jedes Metallatom des Komplexes ein cyclischer, delokalisierter, substituierter π-gebundener Rest ist.

26. Verfahren nach Anspruch 25, umfassend das Aktivieren des Katalysators mit erzwungener Geometrie durch einen Cokatalysator, ausgewählt aus der Gruppe, bestehend aus polymeren Alumoxanen, oligomeren Alumoxanen, polymeren Carbylboranen, oligomeren Carbylboranen, monomeren Carbylboranen, Aluminiumalkylen, Aluminiumhalogeniden, Haloaluminiumalkylen, Ammoniumsalzen, Silbersalzen, Ferroceniumionen und Gemischen davon.

27. Gefertigter Gegenstand, umfassend ein quervernetztes Interpolymer nach Anspruch 1.

28. Gefertigter Gegenstand, umfassend ein thermoplastisches Vulkanisat nach Anspruch 17.

## Revendications

1. Elastomère thermodurci comprenant un interpolymère réticulé de :
(a) 15 à 70 % en poids d'au moins une α-oléfine,
(b) 30 à 70 % en poids d'au moins un composé vinylidène aromatique, et
(c) 0 à 15 % en poids d'au moins un diène,
dans lequel la distribution des monomères de l'interpolymère est décrite par le modèle statistique de Bernoulli ou par un modèle statistique de Markov du premier ou du second ordre.

2. Elastomère thermodurci selon la revendication 1, dans lequel les groupes phényle ou phényle substitué du composé vinylidène aromatique sont séparés par deux ou plus de deux motifs carbonés de la chaîne.

3. Elastomère thermodurci selon l'une des revendications 1 ou 2, dans lequel l'interpolymère réticulé est constitué de :
(a) 25 à 60 % en poids d'au moins une α-oléfine,
(b) 35 à 60 % en poids d'au moins un composé vinylidène aromatique, et
(c) 3 à 15 % en poids d'au moins un diène.

4. Elastomère thermodurci selon l'une des revendications 1, 2 ou 3, dans lequel l'interpolymère réticulé est constitué de :
(a) 40 à 65 % en poids d'au moins une α-oléfine choisie dans le groupe formé par l'éthylène, le propylène, le 1-butène, le 3-méthyl-1-butène, le 1-pentène, le 4-méthyl-1-pentène, le 1-hexène, le 5-méthyl-1-hexène, le 4-éthyl-1-hexène, le 1-octène, le 1-dodécène, le 3-phénylpropylène, et leurs mélanges ; et
(b) de 35 à 60 % en poids d'au moins un composé vinylidène aromatique choisi dans le groupe formé par le styrène, l'α-méthylstyrène, l'ortho-méthylstyrène, le méta-vinylstyrène, le para-méthylstyrène, le chlorostyrène, le vinylbenzocyclobutane et le divinylbenzène, et leurs mélanges.

5. Elastomère thermodurci selon l'une des revendications 1 à 4, dans lequel :
(a) l'α-oléfine est choisie dans le groupe formé par l'éthylène, le propylène, le 1-butène, le 3-méthyl-1-butène, le 1-pentène, le 4-méthyl-1-pentène, le 1-hexène, le 5-méthyl-1-hexène, le 4-éthyl-1-hexène, le 1-octène, le 1-dodécène, le 3-phénylpropylène, et leurs mélanges ; et
(b) le composé vinylidène aromatique est choisi dans le groupe formé par le styrène, l'α-méthylstyrène, l'ortho-méthylstyrène, le méta-vinylstyrène, le para-méthylstyrène, le chlorostyrène, le vinylbenzocyclobutane et le divinylbenzène, et leurs mélanges ; et
(c) le diène, quand il est présent, est choisi dans le groupe formé par le butadiène, le 1,3-pentadiène, le 1,4-pentadiène, l'isoprène, le 1,4-hexadiène, le 7-méthyl-1,6-octadiène, le dicyclopentadiène, le méthylène-norbornène, l'éthylidène-norbornène, et le méthyltétrahydroindène, et leurs mélanges.

6. Elastomère thermodurci selon la revendication 5, dans lequel l'α-oléfine est l'éthylène, le composé vinylidène aromatique est le styrène, et le diène, quand il est présent, est l'éthylidène-norbornène.

7. Procédé pour préparer un élastomère thermodurci, comprenant :
(a) la réaction d'au moins une α-oléfine avec au moins un composé vinylidène aromatique et éventuellement au moins un diène, en présence d'un catalyseur à géométrie contrainte, pour former un interpolymère, dans lequel la distribution des monomères est décrite par le modèle statistique de Bernoulli ou par un modèle statistique de Markov du premier ou du second ordre ; et
(b) la réticulation dudit interpolymère pour former un élastomère thermodurci.

8. Procédé selon la revendication 7, dans lequel le catalyseur à géométrie contrainte est un complexe de coordination métallique comprenant un métal du Groupe III ou IV ou de la série des Lanthanides du Tableau Périodique des Eléments et un fragment à liaison π délocalisé substitué par un fragment inducteur de contrainte, ledit complexe ayant une géométrie contrainte de l'atome métallique telle que l'angle au niveau du métal entre le centroïde du fragment à liaison x délocalisé substitué et le centre d'au moins un substituant restant soit inférieur à cet angle dans un complexe similaire contenant un fragment à liaison x similaire auquel manque ce substituant inducteur de contrainte, et du moment, en outre, que pour les complexes comprenant plus d'un fragment à liaison x substitué délocalisé, un seul d'entre eux pour chaque atome de métal du complexe est un fragment à liaison π substitué, délocalisé, cyclique.

9. Procédé selon la revendication 7, dans lequel le catalyseur à géométrie contrainte est choisi dans le groupe formé par
le dichlorure de (t-butylamido) (tétraméthyl-η5-cyclopentadiényl)-1,2-éthanediyl zirconium ;
le dichlorure de (t-butylamido) (tétraméthyl-η5-cyclopentadiényl)-1,2-éthanediyl titane ;
le (t-butylamido)diméthyl(tétraméthyl-η5-cyclopentadiényl)silane diméthyl titane ;
le (t-butylamino)diméthyl(tétraméthyl-η5-tétrahydroindényl)silane diméthyl titane ;
le (t-butylamido)diméthyl(tétraméthyl-η5-tétrahydrofluorényl)silane diméthyl titane ;
le (t-butylamido)diméthyl(tétraméthyl-η5-octa-hydrofluorényl)silane diméthyl titane ;
le (t-butylamido)diméthyl(tétraméthyl-η5-cyclopentadiényl)silane dibenzyl titane ;
le (t-butylamido)diméthyl(tétraméthyl-η5-cyclopentadiényl)silane dibenzyl zirconium ; et
leurs mélanges.

10. Procédé selon la revendication 7, comprenant l'activation du catalyseur à géométrie contrainte par un cocatalyseur choisi dans le groupe formé par les alumoxanes polymères, les alumoxanes oligomères, les carbylboranes polymères, les carbylboranes oligomères, les carbylboranes monomères, les alkyl-aluminium, les halogénures d'aluminium, les halogénoalkyl-aluminium, les sels d'ammonium substitué, les sels d'argent, les ions ferrocénium, et leurs mélanges.

11. Procédé selon la revendication 7, dans lequel le catalyseur à géométrie contrainte est activé par du tris(pentafluorophényl)borane.

12. Procédé selon la revendication 7, dans lequel la réticulation est effectuée par un agent de réticulation choisi dans le groupe formé par les peroxydes, les phénols, les azotures, les produits réactionnels d'aldéhyde/amine, les urées substituées, les guanidines substituées, les xanthates substitués, les dithiocarbamates substitués, les thiazoles, les imidazoles, les sulfénamides, les disulfures de thiurame, la paraquinonedioxime, la dibenzoparaquinonedioxime, et le soufre.

13. Procédé selon la revendication 7, dans lequel la réticulation est effectuée par un agent de réticulation choisi dans le groupe formé par les peroxydes, les phénols, les dithiocarbamates substitués, les thiazoles, les imidazoles, les sulfénamides, les disulfures de thiurame, le soufre et leurs mélanges.

14. Procédé selon la revendication 7, dans lequel la réticulation est effectuée en même temps que le mélange de formulation de l'interpolymère.

15. Procédé selon l'une des revendications 7 à 14, dans lequel :
i) l'α-oléfine est choisie dans le groupe formé par l'éthylène, le propylène, le 1-butène, le 1-pentène, le 1-hexène, le 4-méthyl-1-pentène, le 5-méthyl-1-hexène, le 4-éthyl-1-hexène, le 1-octène, le 3-phénylpropène, et leurs mélanges ;
ii) le composé vinylidène aromatique est choisi dans le groupe formé par le styrène, l'α-méthylstyrène, l'ortho-méthylstyrène, le méta-vinylstyrène, le para-méthylstyrène, le chlorostyrène, le vinylbenzocyclobutane et le divinylbenzène, et leurs mélanges ; et
iii) le diène, quand il est présent, est choisi dans le groupe formé par le butadiène, le 1,3-pentadiène, le 1,4-pentadiène, l'isoprène, le 1,4-hexadiène, le 7-méthyl-1,6-octadiène, le dicyclopentadiène, le méthylène-norbornène, l'éthylidène-norbornène, et le méthyl-tétrahydroindène, et leurs mélanges.

16. Produit de vulcanisation thermoplastique comprenant :
(a) l'interpolymère réticulé tel que décrit dans l'une des revendications 1 à 6 ; et
(b) au moins une polyoléfine thermoplastique.

17. Produit de vulcanisation thermoplastique selon la revendication 16, comprenant de 10 à 90 % en poids de l'interpolymère réticulé et de 10 à 90 % en poids de la polyoléfine thermoplastique.

18. Produit de vulcanisation thermoplastique selon la revendication 16, comprenant en outre de 0 à 50 % en poids d'une huile plastifiante secondaire choisie dans le groupe formé par les huiles aromatiques, les huiles naphténiques et les huiles paraffiniques.

19. Produit de vulcanisation thermoplastique selon l'une des revendications 16 à 18, comprenant de 30 à 60 % en poids de l'interpolymère réticulé, de 15 à 55 % en poids de la polyoléfine thermoplastique, et de 15 à 30 % en poids de l'huile plastifiante secondaire.

20. Produit de vulcanisation selon la revendication 16, caractérisé par un gonflement à l'huile ASTM #2 inférieur à 60 %, tel que déterminé par la norme ASTM D-471.

21. Procédé pour préparer un produit de vulcanisation thermoplastique, comprenant :
(a) la réaction d'au moins une α-oléfine avec au moins un composé vinylidène aromatique et éventuellement au moins un diène, en présence d'un catalyseur à géométrie contrainte, pour former un interpolymère, dans lequel la distribution des monomères est décrite par le modèle statistique de Bernoulli ou par un modèle statistique de Markov du premier ou du second ordre ;
(b) le mélange intime de l'interpolymère avec au moins une polyoléfine thermoplastique à une température supérieure au point de fusion ou de ramollissement de la polyoléfine thermoplastique ;
(c) l'apport au mélange intime d'un agent pour réticuler l'interpolymère ;
(d) simultanément la réticulation de l'interpolymère et la combinaison du mélange intime pour former un produit de vulcanisation thermoplastique.

22. Procédé selon la revendication 21, dans lequel :
i) l'α-oléfine est choisie dans le groupe formé par l'éthylène, le propylène, le 1-butène, le 1-pentène, le 1-hexène, le 4-méthyl-1-pentène, le 5-méthyl-1-hexène, le 4-éthyl-1-hexène, le 1-octène, le 3-phénylpropène, et leurs mélanges ;
ii) le composé vinylidène aromatique est choisi dans le groupe formé par le styrène, l'α-méthylstyrène, l'ortho-méthylstyrène, le méta-vinylstyrène, le para-méthylstyrène, le chlorostyrène, le vinylbenzocyclobutane et le divinylbenzène, et leurs mélanges ; et
iii) le diène facultatif est choisi dans le groupe formé par le butadiène, le 1,3-pentadiène, le 1,4-pentadiène, l'isoprène, le 1,4-hexadiène, le 7-méthyl-1,6-octadiène, le dicyclopentadiène, le méthylène-norbornène, l'éthylidène-norbornène, et le méthyltétrahydroindène, et leurs mélanges.

23. Procédé selon la revendication 21, dans lequel la polyoléfine thermoplastique est choisie dans le groupe formé par l'éthylène, le propylène, le 1-butène, le 1-pentène, le 1-hexène, le 2-méthyl-1-propène, le 3-méthyl-1-pentène, le 4-méthyl-1-hexène, le 5-méthyl-1-hexène, et leurs mélanges.

24. Procédé selon la revendication 21, dans lequel l'agent pour réticuler ledit interpolymère est choisi dans le groupe formé par les peroxydes, les phénols, les azotures, les produits réactionnels d'aldéhyde/amine, les urées substituées, les guanidines substituées, les xanthates substitués, les dithiocarbamates substitués, les thiazoles, les imidazoles, les sulfénamides, les disulfures de thiurame, la paraquinonedioxime, la dibenzoparaquinonedioxime, le soufre et leurs mélanges.

25. Procédé selon l'une des revendications 21 à 24, dans lequel le catalyseur à géométrie contrainte est un complexe de coordination métallique comprenant un métal du Groupe III ou IV ou de la série des Lanthanides du Tableau Périodique des Eléments et un fragment à liaison π délocalisé substitué par un fragment inducteur de contrainte, ledit complexe ayant une géométrie contrainte de l'atome métallique telle que l'angle au niveau du métal entre le centroïde du fragment à liaison π délocalisé substitué et le centre d'au moins un substituant restant soit inférieur à cet angle dans un complexe similaire contenant un fragment à liaison π similaire auquel manque ce substituant inducteur de contrainte, et du moment, en outre, que pour les complexes comprenant plus d'un fragment à liaison π substitué délocalisé, un seul d'entre eux pour chaque atome de métal du complexe est un fragment à liaison π substitué, délocalisé, cyclique.

26. Procédé selon la revendication 25, comprenant l'activation du catalyseur à géométrie contrainte par un cocatalyseur choisi dans le groupe formé par les alumoxanes polymères, les alumoxanes oligomères, les carbylboranes polymères, les carbylboranes oligomères, les carbylboranes monomères, les alkyl-aluminium, les halogénures d'aluminium, les halogénoalkyl-aluminium, les sels d'ammonium substitué, les sels d'argent, les ions ferrocénium, et leurs mélanges.

27. Pièce manufacturée comprenant un interpolymère réticulé tel que défini dans la revendication 1.

28. Pièce manufacturée comprenant un produit de vulcanisation thermoplastique tel que défini dans la revendication 17.
